# EUROPEAN PATENT APPLICATION

(11) **EP 4 822 383 A1**
(43) Date of publication of application: **14.10.2026**
(21) Application number: 24900650.3
(22) Date of filing: 04.12.2024
(51) Int. Cl.: G01S 5/02, B60R 25/24, G01S 11/02, G01S 13/84

(54) **POSITION DETECTION SYSTEM, POSITION DETECTION METHOD, AND COMPUTER**

(30) Priority: 07.12.2023 JP 2023206916
(71) Applicant: DENSO CORPORATION, Aichi-pref 448-8661 (JP)
(72) Inventor: INAGAKI Tatsuya, Kariya- city, Aichi-pref., 448-8661 (JP); SAIKI Takashi, Kariya- city, Aichi-pref., 448-8661 (JP); NAKANO Yuichiro, Kariya- city, Aichi-pref., 448-8661 (JP); TAKASHIMA Kei, Kariya- city, Aichi-pref., 448-8661 (JP); SUGIYAMA Hironao, Kariya- city, Aichi-pref., 448-8661 (JP)
(74) Representative: Winter, Brandl - Partnerschaft mbB
(86) International application number: PCT/JP2024/042903
(87) International publication number: WO 2025/121356

(57) **Abstract**

A system includes multiple UWB modules (3) equipped to a vehicle (Hv) and performing UWB communication with a mobile device (9), at least one BLE module (2) equipped to the vehicle (Hv) and performing BLE communication with the mobile device (9), and a computer (1) configured to execute a process to determine a position of the mobile device (9) relative to the vehicle (Hv) based on the UWB communication signal and/or the BLE communication signal. The computer (1) determines whether UWB communication is possible, and in response to determining that the UWB communication is not possible, the computer uses the BLE communication signal to determine the position of the mobile device (9) relative to the vehicle (Hv).

## Description

### CROSS REFERENCE TO RELATED APPLICATION

This application is based on Japanese Patent Application No. 2023-206916 filed on December 7, 2023, the disclosure of which is incorporated herein by reference.

### TECHNICAL FIELD

The present disclosure relates to a technology for detecting a position of a mobile device relative to an object by performing a wireless communication between the object and the mobile device.

### BACKGROUND ART

Patent Literature 1 discloses a vehicle control device that can accurately measure a distance between a vehicle and a mobile terminal while minimizing power consumption. In the vehicle control device described in Patent Literature 1, when the mobile terminal enters an external communication area corresponding to Bluetooth (registered trademark, hereinafter the same) low-energy (LE) communication, Bluetooth LE communication is performed between the vehicle and the mobile terminal. Through this Bluetooth LE communication, the mobile terminal transmits, to the vehicle, location information including a current location of the mobile terminal detected by a GPS sensor equipped to the mobile terminal. The vehicle control device measures a distance between the vehicle and the terminal based on the received terminal location information and the vehicle's current position detected by a GPS sensor. equipped to the vehicle. Such distance has a relatively low accuracy.

The vehicle control device uses time-series data of the measured distance between the vehicle and the terminal to perform ultra-wideband (UWB) communication only when the mobile terminal is determined to be approaching the vehicle, thereby measuring the distance between the vehicle and the terminal with relatively high accuracy. In this way, when the mobile terminal is located within the vehicle's external communication area, UWB communication between the vehicle and the mobile terminal is allowed to be performed under a preset condition, thereby reducing the power consumption required for measuring the distance between the vehicle and the mobile terminal with relatively high accuracy.

### PRIOR ART LITERATURE

### PATENT LITERATURE

Patent Literature 1: JP 2021-096143 A

### SUMMARY

The device described in Patent Literature 1 does not anticipate any situation in which UWB communication cannot be used as usual. As described above, the UWB communication is a communication method capable of measuring the distance between vehicle and terminal with relatively high accuracy. For example, in some countries, outdoor use of UWB communication may be restricted. In some cases, a part of multiple UWB communication antennas or communication devices installed on the vehicle has malfunction, normal UWB communication signals cannot be obtained. This may prevent the measurement of distance between vehicle and terminal with relatively high accuracy. Therefore, it becomes difficult to detect the location of mobile terminal when a situation arises in which UWB communication, which can measure the distance between vehicle and terminal with relatively high accuracy, cannot be used as usual.

The present disclosure is made in view of the above-mentioned points, and aims to provide a position detection system, a position detection method, and a computer, each of which can detect a position of mobile device relative to an object even in a situation where a first communication unit has difficulty in wirelessly communicating with the mobile device using a first communication method capable of detecting a position with high accuracy.

To achieve the above object, a position detection system according to the present disclosure detects a position of a mobile device relative to an object. The position detection system includes a first communication unit equipped to the object and configured to perform a wireless communication with the mobile device using a first communication method. The position detection system includes a second communication unit equipped to the object and configured to perform a wireless communication with the mobile device using a second communication method. The second communication method is different from the first communication method. The position detection system includes a computer configured to execute a process to decide the position of the mobile device relative to the object based on a first communication signal wirelessly communicated between the first communication unit and the mobile device and/or a second communication signal wirelessly communicated between the second communication unit and the mobile device. The first communication method is ultra-wideband (UWB) communication. The computer includes a determination unit configured to determine whether the wireless communication with the mobile device can be performed using the first communication unit. The computer includes a decision unit configured to decide the position of the mobile device relative to the object using the second communication signal in response to the determination unit determining that the wireless communication with the mobile device cannot be performed using the first communication unit.

A position detection method according to the present disclosure is performed by a computer for detecting a position of a mobile device relative to an object. The position detection method includes acquiring at least one of a first communication signal communicated in a wireless communication between a first communication unit equipped to the object and the mobile device using a first communication method, and a second communication signal communicated in a wireless communication between a second communication unit equipped to the object and the mobile device using a second communication method. The second communication method is different from the first communication method, and the first communication method is ultra-wideband (UWB) communication. The position detection method includes determining whether the wireless communication with the mobile device can be performed using the first communication unit. The position detection method includes deciding the position of the mobile device relative to the object using the second communication signal in response to determining that the wireless communication with the mobile device cannot be performed using the first communication unit.

A computer disclosed according to the present disclosure executes a process for detecting a position of a mobile device relative to an object. The computer is configured to acquire a first communication signal communicated in a wireless communication between a first communication unit equipped to the object and the mobile device using a first communication method, and a second communication signal communicated in a wireless communication between a second communication unit equipped to the object and the mobile device using a second communication method. The second communication method is different from the first communication method, and the first communication method is ultra-wideband (UWB) communication. The computer includes a determination unit configured to determine whether the wireless communication with the mobile device can be performed using the first communication unit, and a decision unit configured to decide the position of the mobile device relative to the object using the second communication signal when the determination unit determines that the wireless communication with the mobile device cannot be performed using the first communication unit.

Each of the position detection system, the position detection method, and the computer described above determines whether wireless communication with the mobile device can be performed using the first communication unit. In response to determining that wireless communication with the mobile device cannot be performed using the first communication unit, the position of the mobile device relative to the object is decided using the second communication signal wirelessly transmitted between the second communication unit and the mobile device according to the second communication method. Therefore, even when the first communication unit, which wirelessly communicates with the mobile device using the first communication method, becomes unusable, it is still possible to detect the position of the mobile device relative to the object by using the second communication signal.

The reference symbols and/or numerals in parentheses of claims are merely added to indicate examples of correspondence relationships with concrete structures in the below-described embodiments in order to facilitate the understanding of the present disclosure, which has no intention to limit the scope of the present disclosure in any manner.

Technical features described in claims other than the above-mentioned features become apparent from the description of the embodiments and the accompanying drawings.

### BRIEF DESCRIPTION OF DRAWINGS

FIG. 1 is a diagram showing an overall view of a vehicle electronic key system to which a position detection system is applied.
FIG. 2 is a block diagram showing a configuration of a mobile device.
FIG. 3 is a block diagram showing a configuration of a vehicle-mounted system.
FIG. 4 is a diagram showing an arrangement example of a BLE module and UWB modules with respect to a vehicle.
FIG. 5 is a block diagram showing a configuration of the BLE module.
FIG. 6 is a diagram schematically showing a flow of CS ranging process.
FIG. 7 is a diagram showing an operation of a mobile device and a vehicle-mounted system when the mobile device and the vehicle-mounted system have not yet established a communication connection.
FIG. 8 is a diagram showing an operation of a mobile device and a vehicle-mounted system when a communication connection is established between the mobile device and the vehicle-mounted system, and the mobile device and the BLE module periodically communicate data via BLE communication.
FIG. 9 is a diagram showing an operation of a mobile device and a vehicle-mounted system when the mobile device and the vehicle-mounted system perform CS ranging communication.
FIG. 10 is a diagram showing an operation of a mobile device and a vehicle-mounted system when the mobile device and the vehicle-mounted system perform UWB ranging communication.
FIG. 11 is a functional block diagram of a main controller.
FIG. 12 is a diagram showing an example of areas set inside and outside a vehicle in order to determine position of the device belongs to which area.
FIG. 13 is a flowchart showing a process for detecting a position of a mobile device, which is performed in a vehicle-mounted system using either a BLE module or a UWB module.
FIG. 14 is a diagram showing an example of areas for determining whether a mobile device belongs to an area using a BLE module.
FIG. 15 is a flowchart showing an example of a process for determining a ranging method to measure a distance to a mobile device.
FIG. 16 is a flowchart showing a process for detecting a position of a mobile device, which is performed in a vehicle-mounted system using either a BLE module or a UWB module, according to a second embodiment.
FIG. 17 is a diagram showing whether UWB ranging communication with a mobile device is possible when one of multiple UWB modules has malfunction.
FIG. 18 is a flowchart showing a process for detecting a position of a mobile device, which is performed in a vehicle-mounted system using either a BLE module or a UWB module or using both BLE module and UWB module, according to a third embodiment.
FIG. 19 is a flowchart showing a process for periodically performing both CS ranging and UWB ranging.
FIG. 20 is a diagram showing a configuration according to a modification example.

### DESCRIPTION OF EMBODIMENTS

The following describes embodiments in which a position detection system, a position detection method, and a computer are applied to an electronic key system for vehicles, with reference to the accompanying drawings. However, the present disclosure is not limited to the following embodiments, and various modifications described below are also included in the technical scope of the present disclosure. In addition to the following embodiments, various modifications can be made without departing from the spirit of the present disclosure. The embodiments and various modification examples can be combined as appropriate within the scope of the present disclosure without causing any technical contradiction. Components having the same function are denoted by the same reference symbol, and the description thereof may be omitted. In addition, in a case where only a part of the configuration is referred to in an embodiment or modification example, the description in the foregoing embodiment may be applied to the remaining configuration.

### (First Embodiment)

### (Overall configuration)

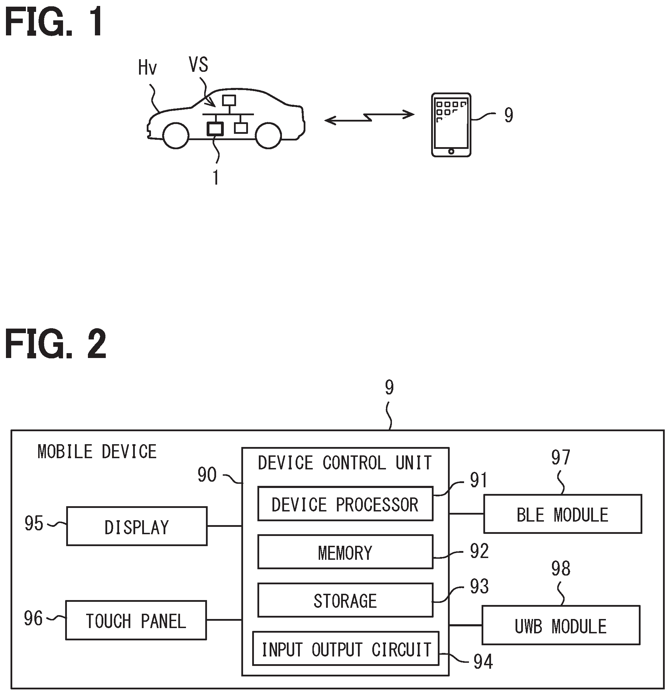

As shown in FIG. 1, a vehicle electronic key system of the present embodiment includes a vehicle-mounted system VS and a mobile device 9. The vehicle-mounted system VS includes ECU 1. ECU is an abbreviation for electronic control unit and means an electronic control device. ECU 1 can also be referred to as a computer, microcontroller, or processor.

The ECU 1 is configured to enable wireless communication (hereinafter referred to as BLE communication) compliant with Bluetooth LE, with a mobile device 9 carried by a user of the vehicle Hv. The following describes a case where ECU 1 serves as a master and the mobile device 9 serves as a slave in BLE communication performed between the ECU 1 and the mobile device 9. The description of master can be read as central or scanner. The description of slave can be read as a peripheral or an advertiser.

The ECU 1 establishes a communication connection with the mobile device 9 by receiving an advertising signal from the mobile device 9. An advertising signal is a signal used to notify other devices of its presence, that is, to advertise. The advertising signal may include a code indicating the source or destination of transmission. The source and destination can be represented by identifiers such as device IDs. In another embodiment, the vehicle electronic key system may be configured such that the mobile device 9 serves as the master and the ECU 1 serves as the slave in the communication between the mobile device and the ECU 1. The role of each device can be interchanged. The functions and configurations of the ECU 1 and the mobile device 9 can be changed as appropriate in accordance with the changing of roles.

In the present disclosure, a wireless signal conforming to the BLE standard is referred to as a BLE signal. The BLE signal from the advertising channel may be referred to as the advertising signal, and the BLE signal from the data channel may be referred to as data signal. Of the 40 channels used for BLE communication, channels numbered 37 through 39 are designated as advertising channels. A channel with a channel number of 0 to 36 corresponds to a data channel. The definitions of the advertising channel and data channel, as well as their specific frequency values, are determined according to the BLE standard. In response to changes in the BLE standard, the configuration of the present disclosure may be modified as appropriate to comply with the revised standard.

The vehicle-mounted system VS and the mobile device 9 are configured to enable UWB communication, which is a wireless communication method using UWB-IR (Ultra Wide Band-Impulse Radio). In other words, the vehicle-mounted system VS and the mobile device 9 are configured to transmit and receive impulse-like radio waves (hereinafter referred to as impulse signals) used in UWB communication. The impulse signal used in the UWB communication has a pulse width of an extremely short time (for example, 2 nanoseconds) and has a bandwidth of 500 MHz or more (that is, an ultra wide bandwidth).

In UWB communication, multiple channels may be used, as defined in IEEE 802.15.4z. Depending on the country, the channels (frequency bands) available for UWB communication may be restricted. The vehicle-mounted system VS can communicate with the mobile device 9, for example, using the fifth channel of UWB communication. Of course, the vehicle-mounted system VS can be configured to communicate with the mobile device 9 using other channels, such as the third channel or the ninth channel. The third channel has a center frequency of 4492 MHz, the fifth channel has a center frequency of 6489.6 MHz, and the ninth channel has a center frequency of 7987.2 MHz. IEEE (registered trademark) stands for Institute of Electrical and Electronics Engineers, and refers to the American Institute of Electrical and Electronics Engineers. Each channel corresponds to a frequency band of ±250 MHz from the center frequency. The UWB communication may use frequencies such as 3.1 GHz to 4.8 GHz, and 6.0 GHz to 10.6 GHz.

A variety of modulation methods can be used for UWB communication, including on-off keying (OOK), pulse position modulation (PPM), and pulse width modulation (PWM). The on-off modulation is a method of representing information (for example, 0 and 1) based on the presence or absence of an impulse signal. The pulse position modulation method is a method of performing modulation at a pulse generation position. The pulse width modulation method is a method of expressing information by a pulse width. In this example, UWB communication between the vehicle-mounted system VS and the mobile device 9 is performed using the OOK method. Data transmission via UWB communication can be achieved using multiple impulse signals. Hereafter, data signals exchanged via UWB communication will be referred to as UWB signals. Because UWB signals contain multiple impulse signals, they can also be referred to as pulse sequence signals.

### (Mobile Device 9)

The mobile device 9 is a portable and general-purpose information processing terminal equipped with functions of BLE communication and UWB communication. As the mobile device 9, various communication terminals, such as a smartphone or a wearable device can be adopted. The wearable device is a device to be worn on the user body and can adopt various forms, such as wristband, wristwatch, ring, eyeglass, and earphone types. The mobile device 9 may also be referred to as a user device, a key device, or the like.

The mobile device 9 may be a smart key, which is a dedicated device that serves as the electronic key for the vehicle Hv. Usually, the smart key is transferred to the owner together with the vehicle Hv when the vehicle Hv is purchased. A smart key can be understood as one of the accessories for a vehicle Hv. The smart key may be referred to as a mobile device for vehicle, a key fob, a key card, an access key, or the like.

As shown in FIG. 2, the mobile device 9 includes a device control unit 90, a display 95, a touch panel 96, a BLE module 97, and a UWB module 98.

The device control unit 90 is a module that controls an entire operation of the mobile device 9. The device control unit 90 is configured by a computer, for example, equipped with a device processor 91, memory 92, storage 93, input output circuit 94, or the like. The device processor 91 is, for example, a CPU (Central Processing Unit). The memory 92 is a volatile storage medium, such as RAM (Random Access Memory). The storage 93 includes a non-volatile storage medium, such as flash memory. The input output circuit 94 is a circuit for the device control unit 90 to receive signals from other components within the mobile device 9 and to output signals to other components within the mobile device 9.

The storage 93 may store the device ID, the key code used for wireless authentication of the ECU 1. The key code may also be referred to as an encryption key or the like. A digital key application, which is application software for causing the mobile device 9 to function as a vehicle key, may be installed in the storage 93. The digital key application is an application for performing a secure communication with the ECU 1, and for responding to inquiries or requests from the ECU 1. In the present disclosure, application software may be simply referred to as an application or app.

The display 95 is, for example, a liquid crystal display or an organic EL display. The display 95 displays an image according to a signal input from the device control unit 90. The touch panel 96 is, for example, a capacitive touch panel, which is arranged on the display 95. The touch panel 96 is an input device included in the mobile device 9. The display 95 and touch panel 96 correspond to interfaces for the user to enter a password into the mobile device 9 to log in to the digital key application, or to input an operation for pairing the mobile device 9 with the ECU 1.

The BLE module 97 is a communication module for performing BLE communication. The BLE module 97 includes a received strength detection unit, which is a functional unit that measures a strength of the received signal. The measured signal strength can also be referred to as RSSI (Received Signal Strength Indicator). The BLE module 97 outputs data indicating the measured received strength, along with source information, to the device control unit 90, in addition to the received data.

The BLE module 97 may be configured to transmit and receive, in addition to the modulated signal for data communication, continuous wave (CW) signal having predetermined waveform as a signal for CS (Channel Sounding) ranging, which will be described later. The CW signal may have a waveform of a sine wave or a triangular wave. The BLE module 97 may have the same configuration as a BLE module 2 included in the vehicle-mounted system VS, which will be described later. The description of BLE module 2 may be partially or entirely adapted to the BLE module 97.

The UWB module 98 is a communication module for performing UWB communication. The UWB module 98 outputs the received data to the device control unit 90. The UWB module 98 transmits a UWB signal corresponding to data to be transmitted based on an instruction from the device control unit 90. The UWB module 98 can also transmit a UWB signal for ranging purpose based on an instruction from the device control unit 90. The operation of the UWB module 98 is controlled by the device control unit 90.

The device control unit 90 causes the BLE module 97 to transmit the advertising signal at a predetermined transmission interval in order to initiate the BLE communication with the ECU 1. The device control unit 90 establishes a BLE communication connection with the vehicle Hv (ECU 1) in response to that the BLE module 97 has received a connection request transmitted from the ECU 1 in response to the advertising signal. The device control unit 90 may perform authentication process using wireless communication (hereinafter referred to as wireless authentication process) in response to the establishment of communication connection with the ECU 1. The wireless authentication process may be performed, for example, by a challenge-response method. In this case, in response to receiving a challenge code from the ECU 1, the device control unit 90 may generate a response code using the key code and transmit the generated response code back to the ECU 1.

When the BLE module 97 is equipped with a CS ranging function, the device control unit 90 performs communication for CS ranging based on a request from the ECU 1. For example, the device control unit 90 causes the BLE module 97 to transmit a CW signal of a specified channel (or frequency) based on a request from the ECU 1. The interaction between the device control unit 90 and the ECU 1 will be described later.

When the device control unit 90 receives a UWB signal transmitted from the vehicle-mounted system VS, the device control unit 90 returns a response signal corresponding to the received signal via the UWB module 98. For example, when the device control unit 90 receives a UWB signal as a search signal, the device control unit can return a UWB signal modulated with a code including the device ID of the mobile device 9 to the vehicle-mounted system VS as the response signal. The search signal is a signal for the vehicle-mounted system VS to search for the mobile device 9, and is a type of signal requesting the mobile device 9 to return the response signal. The UWB signal transmitted by the mobile device 9 may include a code indicating the source or destination of transmission, and the UWB signal transmitted by the vehicle-mounted system VS may include a code indicating the source or destination of transmission.

When the communication between the device control unit 90 and the ECU 1 is in disconnected state, the device control unit causes the BLE module 97 to periodically transmit an advertising signal at a predetermined advertising interval. The device control unit 90 stops an operation of the UWB module 98 while the communication with the ECU 1 via BLE communication is in disconnected state. In response to the establishment of BLE communication connection with the ECU 1, the device control unit 90 activates the UWB module 98, and enables UWB communication. This configuration reduces the power consumption of UWB module 98.

The device control unit 90 may be configured to, after establishing the BLE communication connection with the ECU 1, start the UWB module 98 under a condition that a UWB ranging start request from the ECU 1 is received via the BLE communication. The UWB ranging start request is a BLE signal that requests start of UWB ranging process. In most of cases, power consumption by the UWB module 98 is greater than that of the BLE module 97. Therefore, by reducing the operation period of the UWB module 98, improved power saving effects can be provided.

### (Vehicle-mounted system)

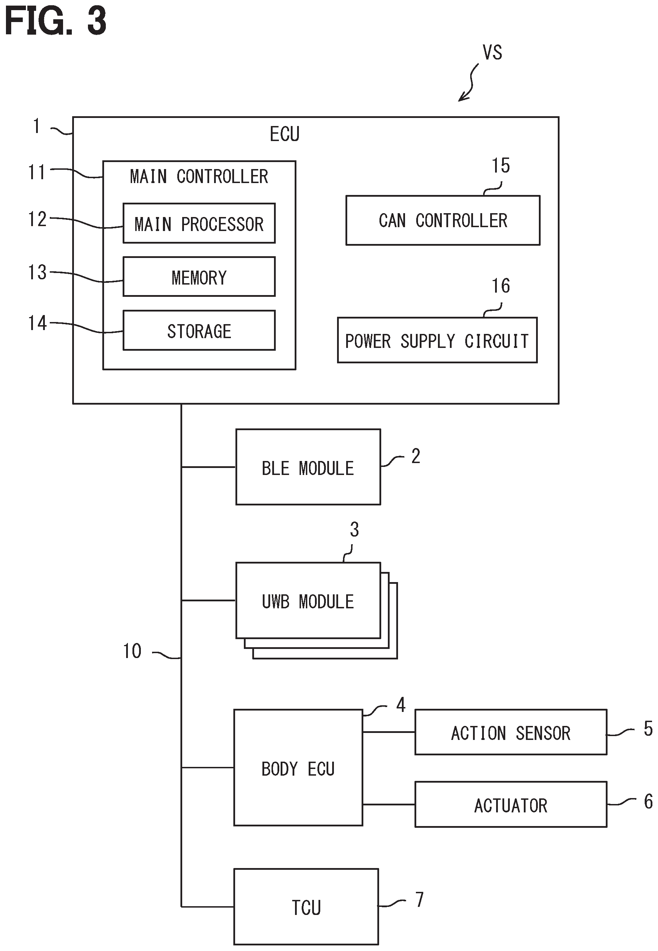

As shown in FIG. 3, the vehicle-mounted system VS includes an ECU 1, a BLE module 2, multiple UWB modules 3, a body ECU 4, an action sensor 5, an actuator 6, and a telematics control unit (TCU) 7. The ECU 1, the BLE module 2, the multiple UWB modules 3, the body ECU 4, and the TCU 7 are connected with one another in communicable manner, for example, via an in-vehicle network. As the standard of the in-vehicle network, various standards such as Controller Area Network (CAN: registered trademark), Ethernet (registered trademark), FlexRay (registered trademark), and the like can be adopted. The following explanation will focus on the case where CAN is adopted as the standard for in-vehicle network. The body ECU 4 is connected to the action sensor 5 and the actuator 6. The connection configuration of the components disclosed herein is an example and the configuration of connection can be modified as appropriate.

The ECU 1 executes a process to determine the position of the mobile device 9 relative to the vehicle Hv based on the BLE signal (more specifically, the RSSI and CS ranging result of the BLE signal) communicated between the BLE module 2 of the vehicle-mounted system VS and the BLE module 97 of the mobile device 9, and/or the UWB signal (more specifically, the UWB ranging result ) communicated between the UWB module 3 of the vehicle-mounted system VS and the UWB module 98 of the mobile device 9. For example, the ECU 1 detects the position of the mobile device 9 by determining, based on the UWB signals communicated between multiple UWB modules 3 and the mobile device 9, whether the mobile device 9 is located in an entry area EA defined outside the vehicle or in an engine start area ESA defined inside the vehicle. Since the mobile device 9 corresponds to the user, detecting position of the mobile device is equivalent to detecting the position of user.

As shown in FIG. 3, the ECU 1 includes a main controller 11, a CAN controller 15, and a power supply circuit 16. The main controller 11 is a computer that performs various processes related to detecting the position of the mobile device 9. The main controller 11 includes a main processor 12, a memory 13, and a storage 14. The main processor 12 is, for example, a CPU that performs predetermined process according to software. The memory 13 is a volatile storage medium, such as RAM.

The storage 14 includes a non-volatile storage medium, such as flash memory. The storage 14 stores a device position detection program to be executed by the main processor 12. When the main processor 12 executes the device position detection program, it is equivalent to executing a position detection method corresponding to the device position detection program. The device ID of the mobile device 9 (for example, a preset Bluetooth address) is registered in the storage 14. In addition, the storage 14 stores data indicating the mounting positions of the BLE module 2 and respective UWB modules 3 in the vehicle Hv.

The CAN controller 15 performs communication process with other components of the vehicle-mounted system VS in accordance with the CAN protocol, in response to an instruction from the main controller 11. The CAN controller 15 performs transmission process, receiving process, and arbitration process as communication process. For example, the CAN controller 15 performs the receiving process in response that a data frame is stored in the receive buffer. The receiving process includes determining whether the received data frame is a corrupted or invalid data frame by form checking, staff checking, and cyclic redundancy checking. The CAN controller 15 determines, for example, with respect to the UWB module 3, whether the response signal, which is received in response to a request to transmit the UWB ranging result, corresponds to the aforementioned invalid data frame. When the data frame is determined to be invalid, there may exist some malfunction in the UWB module 3 that has sent the request signal, and the potential malfunction occurred in the corresponding UWB module is reported to the main controller 11. When the CAN controller 15 fails to receive a response signal within a predetermined period after sending a request signal to the UWB module 3, there may exist some malfunction in the UWB module 3 that has sent the request signal, and the potential malfunction occurred in the corresponding UWB module is report this to the main controller 11.

The power supply circuit 16 is a circuit module that supplies power to the main controller 11, the CAN controller 15, and others. The power supply circuit 16 converts the voltage input from the power cable (for example, battery voltage) into a voltage suitable for the operation of the main controller 11 and the CAN controller 15, and supplies the converted voltage to each component.

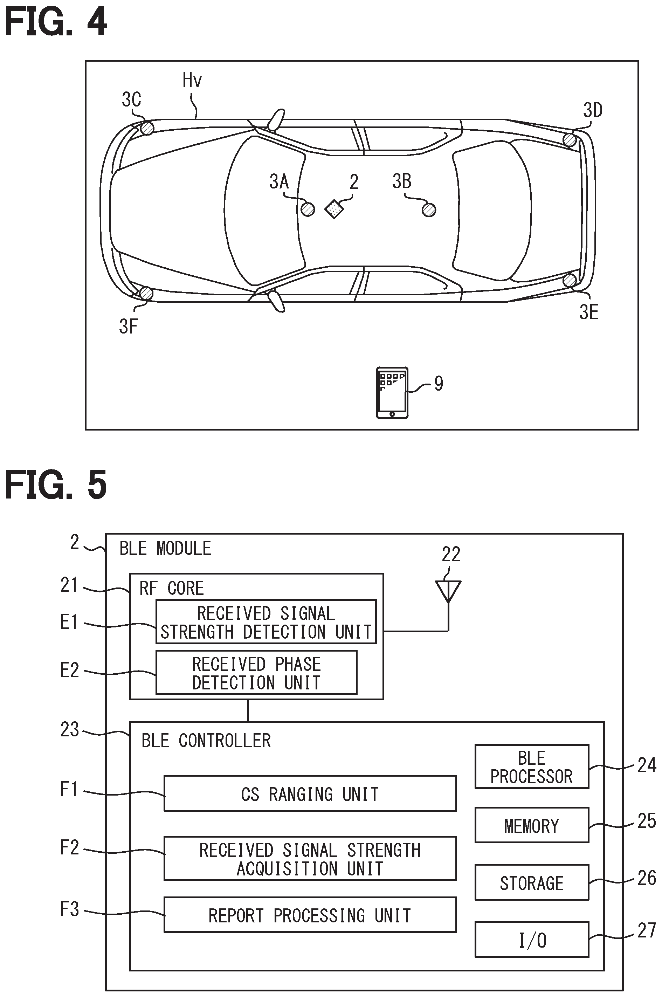

The BLE module 2 is a communication module for performing BLE communication. In the present embodiment, one BLE module 2 is installed in the vehicle Hv. Alternatively, multiple BLE modules 2 may be installed in the vehicle Hv. The BLE module 2 is arranged, for example, inside the vehicle compartment, as shown in FIG. 4. The BLE module 2 is configured to transmit and receive CW signals for each channel (or frequency) as signals for CS ranging, in addition to modulated signals for data communication. The BLE module 2 is configured to scan advertising signals even while the vehicle Hv is in parked state, using power supplied from the vehicle battery.

The UWB module 3 is a communication module for performing UWB communication. As shown in FIG. 4, multiple UWB modules 3A to 3F are installed in the vehicle Hv. Each UWB module 3 installed in the vehicle Hv is configured to transmit and receive UWB signals, similar to the UWB module 98 of the mobile device 9. Each UWB module 3, as will be described in more detail later, performs UWB communication for ranging purpose with the mobile device 9 when the ECU 1 determines that wireless communication with the mobile device 9 is possible. Through this UWB communication, the distance (device distance) from each UWB module 3 to the mobile device 9 is measured, and the position of the mobile device 9 is detected based on the measured distance. Each UWB module 3 is also referred to as an anchor or reference station.

Each UWB module 3 is equipped with an antenna for UWB communication, a transceiving circuit, a UWB controller, and the like. The transceiving circuit is configured to perform a signal processing related to modulation and demodulation. The UWB controller is a microcomputer that controls the operation of the UWB module 3 and generates the UWB ranging data to be described below.

Each UWB module 3 performs UWB ranging process based on an instruction from the ECU 1. The UWB ranging process measures the device distance based on the radio wave propagation time (in other words, flight time) required for propagating from the UWB module 3 to the mobile device 9. The UWB ranging process includes transmitting a predetermined pattern of UWB signal to the mobile device 9 and receiving a UWB signal as a response signal from the mobile device 9. In the UWB ranging process, the UWB signal exchanged between the UWB module 3 and the mobile device 9 may be a single impulse signal, or a pulse sequence signal in which multiple impulse signals are arranged in a predetermined pattern.

The UWB controller measures the round-trip time (RTT), which is the elapsed time from transmission of a UWB signal to receiving of a response signal from the mobile device 9, and calculates the device distance based on the RTT. The RTT corresponds to the round-trip flight time of UWB signal. In the present embodiment, the UWB controller may calculate the device distance by multiplying half of the value obtained by subtracting a predetermined correction value from the RTT by the radio wave propagation time. The correction value here is a parameter used to offset the response processing time in the mobile device 9 and the delay time in the UWB module 3. A specific value of the correction value can be appropriately set. The UWB module 3 transmits the calculated device distance to the ECU 1 as the UWB ranging data. The main controller 11 may be configured to perform the process for converting RTT to distance.

As shown in FIG. 4, the vehicle-mounted system VS includes multiple UWB modules 3, such as a front inside anchor 3A, a rear inside anchor 3B, a right front anchor 3C, a right rear anchor 3D, a left rear anchor 3E, and a left front anchor 3F. Both the front inside anchor 3A and the rear inside anchor 3B are UWB modules 3 located inside the vehicle. The right front anchor 3C, the right rear anchor 3D, the left rear anchor 3E, and the left front anchor 3F are all UWB modules 3 located on the outer surface of the vehicle Hv. The configuration and performance of each UWB module 3 may be substantially the same regardless of the installation location. Note that the arrangement example of multiple UWB modules 3 shown in FIG. 4 is one example, and the multiple UWB modules 3 may be arranged in different locations from the example shown in FIG. 4.

Each UWB module 3 operates according to an instruction from the ECU 1. Each UWB module 3 is started based on an instruction from the ECU 1 and performs the UWB ranging process. The UWB module 3, which has performed the UWB ranging process, stops operation either in self-control manner or based on an instruction from the ECU 1.

The body ECU 4 is configured to detect a user operation (action) made on the vehicle Hv based on an input signal from the action sensor 5, and operate the actuator 6 in accordance with the detected user operation. Examples of the action made on the vehicle Hv by the user include a locking operation, an unlocking operation, seating, pressing of a start switch, stepping on a brake pedal, and the like. The action sensors 5 may include, for example, door sensors provided on the external door handles, start switch, brake pedal sensor, and seat occupancy sensor. The ECU 1 can detect touch operation on the door sensor as unlocking or locking operation. The door sensor is configured to detect a user action to unlock or lock the door of vehicle Hv. The door sensor may be a touch sensor or a push switch. The start switch is a push switch for the user to turn on or turn off the power supply for traveling purpose.

The actuator 6 may include, for example, a lock motor, or a mechanism for switching the headlights or welcome lamps on and off. The lock motor is a motor used to lock or unlock the door. The welcome lamp is a vehicle-mounted lighting facility that illuminates a road surface or other objects located near the door. The welcome lamp may be equipped to a side mirror, a side sill, a lower end portion of a door panel, or the like.

The body ECU 4 may send an event occurrence notification signal to the ECU 1 in response to detecting a predetermined event that requires detection of the position of mobile device 9, such as an unlocking operation. The ECU 1 may perform control and processing related to the detection of device position in response to the input of event occurrence notification signal from the body ECU 4.

The TCU 7 is a communication unit that enables the vehicle Hv to communicate various types of information bidirectionally with an external network. The TCU 7 may be located in a housing of the ECU 1, instead of being connected to the ECU 1 via the in-vehicle network. The TCU 7 has a wireless module for performing wireless communication with an external network. For example, the TCU 7 can perform wireless communication with an external network via the wireless module, thereby reporting the vehicle's status and location information to a management center in the event of vehicle accident or other incident. The TCU 7 can acquire data from a data center to update the software installed in various ECUs of the vehicle Hv.

The TCU 7 can obtain a mobile country code indicating an operating area and a mobile network code indicating a telecommunication carrier, from a communication target device through the communication with the external network via the wireless module. The TCU 7 repeatedly transmits the acquired mobile country code to the main controller 11 at a predetermined interval. The TCU 7 is equipped with a GPS receiver for acquiring the position information of vehicle Hv. The TCU 7 also repeatedly transmits the position information of vehicle, determined by the GPS receiver, to the main controller 11 at a predetermined interval. This enables the main controller 11 to identify the country to which the vehicle Hv is located, based on the mobile country code and/or the vehicle position information transmitted from the TCU 7. The mobile country code and/or the vehicle position information correspond to the country information.

### (BLE Module Configuration and Function)

The following will describe an example of configuration and functions of the BLE module 2. As shown in FIG. 5, the BLE module 2 includes an RF core 21, an antenna 22, and a BLE controller 23.

The antenna 22 is an antenna element for transmitting and receiving radio waves in the frequency band used for BLE communication, that is, the 2.4 GHz band. The 2.4 GHz band can be understood as a frequency band that encompasses multiple channels (channel 0 to channel 39) used for BLE communication. The antenna 22 is electrically connected to the RF core 21. The channel may also be referred to as a frequency. Of the multiple channels assigned to the BLE communication, the channel actually used for communication (in other words, the use frequency/channel) changes over time due to frequency hopping or an instruction from the BLE controller.

The RF core 21 is a circuit module that performs signal processing related to the transmission and reception of wireless signals. The RF core 21 may include a modulation circuit, a demodulation circuit, a frequency conversion circuit, an amplifier circuit, a local oscillator, and the like. The RF core 21 also includes input and output terminals for receiving signals from the antenna 22 and outputting signals to the antenna 22. The RF core 21 is connected to the BLE controller 23 in a way that allows for mutual communication. The RF core 21 demodulates the signal received by the antenna 22 and transfers the demodulated signal to the BLE controller 23. The RF core 21 modulates the transmission data input from the BLE controller 23 and transmits the modulated signal as radio waves via the antenna 22. The RF core 21 may be implemented by an IC chip (that is, a transceiver IC).

The RF core 21 is configured to transmit and receive not only modulated signals for data communication, but also CW signal for each channel as the CS ranging function. The RF core 21 includes a received signal strength detection unit E1 and a received phase detection unit E2. The received signal strength detection unit E1 is a functional unit that measures the strength of received signal. The received signal strength detection unit E1 outputs data indicating the detected signal strength to the BLE controller 23.

The received phase detection unit E2 is a circuit that detects the received phase, which is the phase angle of the received signal relative to the output signal of the local oscillator, when a CW signal is received. The phase angle of the received signal relative to the output signal of the local oscillator corresponds to the received phase. In other words, the received phase can be understood as the output value of an arctangent that takes the ratio of the Q (Quadrature-Phase) component to the I (In-Phase) component of the received signal as input value. The magnitude of I component corresponds to the strength of in-phase component of the received signal. The magnitude of Q component corresponds to the strength of quadrature component of the received signal. The I component is obtained by multiplying the received signal by the carrier wave output from the local oscillator. The Q component is obtained by multiplying the received signal by a phase shift signal obtained by shifting the phase of signal output from the local oscillator by 90°. The phase shift signal can be obtained by passing the output signal from the local oscillator through a phase shift circuit, which shifts a phase by 90°.

The local oscillator is a circuit that generates a sine wave or a cosine wave at the carrier frequency, and is implemented by, for example, a voltage-controlled oscillator (VCO). The received phase may be determined based on the IQ signal with the frequency reduced to the baseband. The detected received phase information is used to calculate the device distance.

The RF core 21 provides the BLE controller 23 with a detected value of the received phase of CW signal by associating the detected value with information indicating the use frequency (for example, channel number). The RF core 21 detects the received phase of CW signal as a step of the ranging process each time the use frequency is switched. That is, the BLE controller 23 is provided with data indicating the received phase for each frequency.

The BLE controller 23 is implemented by a microcomputer that controls the RF core 21. The BLE controller 23 includes a processor 24, a memory 25, a storage 26, and an input output circuit 27. The BLE controller 23 controls the transfer of data between the BLE module and the ECU 1. Specifically, the BLE controller 23 provides the received data input from the RF core 21 to the ECU 1 sequentially or based on a request from the ECU 1. The BLE controller 23 outputs the transmission data input from the ECU 1 to the RF core 21.

The BLE controller 23 includes a CS ranging unit F1, a received signal strength acquisition unit F2, and a report processing unit F3. Each of the CS ranging unit F1, the received signal strength acquisition unit F2, and the report processing unit F3 may be either a software module or a hardware module. The following descriptions of the CS ranging unit F1, the received signal strength acquisition unit F2, and the report processing unit F3 can be replaced with BLE module 2 or BLE controller 23 as appropriate.

The CS ranging unit F1 is a functional unit that performs the CS ranging. In the present disclosure, the CS ranging refers to the process of generating distance data indicating the device distance based on distance-related value (received phase), which is a parameter indicating the length of propagation path of the wireless signal from the BLE module 2 to the mobile device 9. The CS ranging includes performing bidirectional or unidirectional communication with the mobile device 9 in order to acquire the received phase, which corresponds to the distance-related value. The CS ranging may also be referred to as High Accuracy Distance Measurement (HADM) or phase difference distance measurement. In the present disclosure, a series of processes including communication for CS ranging may also be referred to as CS ranging process.

In the present embodiment, the CS ranging unit F1 acquires the received phase for each frequency as part of the CS ranging process, and calculates the device distance based on the received phase. The received phase is the phase difference between the CW signal transmitted by the mobile device 9 and the CW signal received by the BLE module 2. The received phase can be referred to as a transmission received phase difference, a single frequency phase difference, or a first-order phase difference.

The CS ranging unit F1 can acquire the received phase for each frequency, for example, using one-way method. The one-way method assumes that the initial phase of the CW signal transmitted from the mobile device 9 for each frequency is constant, and uses the received phase of the CW signal transmitted from the mobile device 9 directly as the basis for calculating the inter-frequency phase difference. The received phase (in other words, the single frequency phase difference) used as the calculation basis of the inter-frequency phase difference can also be acquired by a passive two-way method, an active two-way method, or the like. The passive two-way method and the active two-way method will be described later as a supplement.

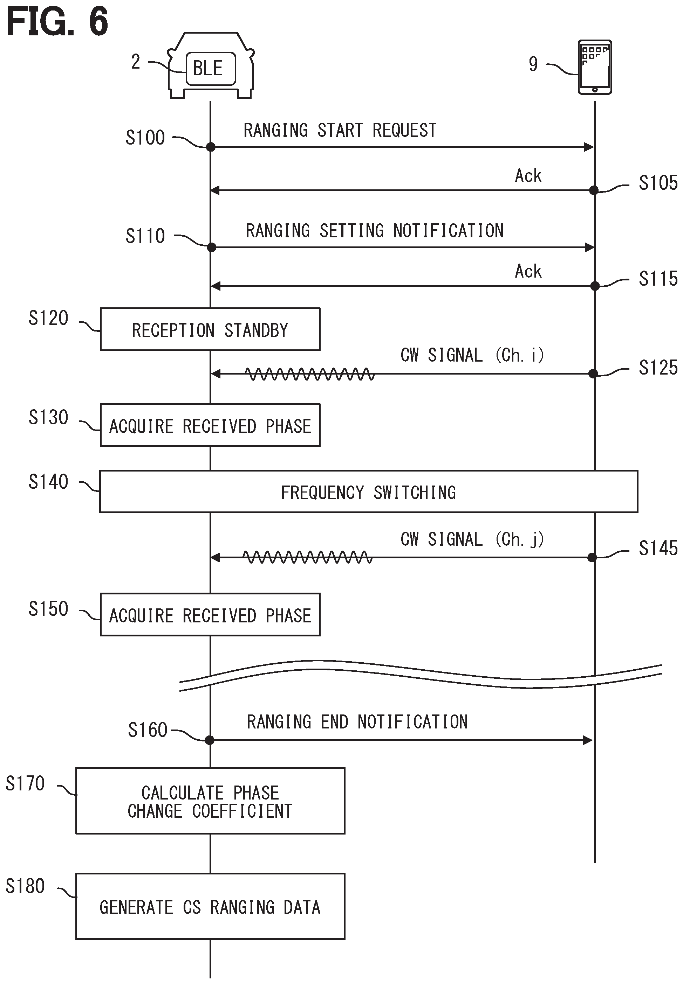

FIG. 6 is a flowchart showing an example of CS ranging process. The CS ranging process includes a preparation phase for adjusting a distance measurement execution condition, a collection phase for collecting a received phase by actually transmitting and receiving the CW signal, and an arithmetic phase for calculating a distance based on the collected received phase for each frequency. In the present disclosure, wireless communication for acquiring a distance-related value (received phase), such as the transmission and reception of CW signal, is also referred to as CW ranging communication.

In S100, the BLE module 2 transmits a CS ranging start request to the mobile device 9. The CS ranging start request is a BLE signal that requests the mobile device 9 to start the CS ranging. The CS ranging start request can be transmitted using a data channel. In S105, the mobile device 9, in response to having received the CS ranging start request, transmits a positive response signal (called as Ack) back to the BLE module 2.

In S110, BLE module 2 transmits a ranging setting notification signal in response to receiving from the mobile device 9, the Ack corresponding to the CS ranging start request. The ranging setting notification signal is a signal that indicates the settings for performing CS ranging communication. The settings for performing ranging communication may include the initial phase setting, hopping interval, frequency transition amount, and initial frequency. The setting value of the initial phase is basically set to 0. The hopping interval represents a time period for switching the frequency, in other words, a time period for maintaining one frequency. The hopping interval may be the same as, or different from, the connection interval used for data communication. The frequency transition amount indicates the amount of frequency change during frequency switching. The frequency transition amount may be set the same as, or different from, the hop increment during the data communication. When the frequency transition amount is set the same as the hop increment during the data communication, the frequency transition amount in the CS ranging may be determined by the hop increment. The initial frequency is set as the frequency of the first CW signal transmitted in a series of ranging communication. The frequency information may be represented, for example, by a channel number, or may be represented in a different manner without using the channel number.

In S115, the mobile device 9 transmits an Ack back to the BLE module 2 in response to having received the ranging setting notification signal. In response to receiving an Ack from the mobile device 9, in S120, the BLE module 2 transitions to a state where it can receive a signal of the initial frequency, that is, a reception standby state.

In S125, the mobile device 9 starts transmission of CW signal at the initial frequency after a predetermined period has elapsed since transmission of the Ack. The sequential transmission of CW signals can be stopped, for example, after a certain period of time has elapsed since start of the CW signal. The CW transmission period, which is the duration for which the CW signals are successively transmitted, should be set to be shorter than the hopping interval. After receiving the ranging setting notification signal, the mobile device 9 may be configured to start transmission of CW signals under a further condition that a CW transmission request from the BLE module 2 is received.

When the BLE module 2 receives the CW signal from the mobile device 9, in S130, the BLE module 2 detects the received phase and stores the received phase data in the memory 25 together with the corresponding frequency information (for example, channel number). In S140, the BLE module 2 and the mobile device 9 automatically switch the use frequency at the hopping interval agreed upon in advance in S110. The frequency after change can be determined based on the frequency before change and the pre-agreed frequency transition amount.

After the mobile device 9 switches the use frequency, in S145, the mobile device 9 transmits a CW signal having the new use frequency. The BLE module 2 also transitions to a state where the BLE module can receive a signal having new use frequency, by switching the use frequency. In S150, the BLE module 2 observes and acquires the received phase at the frequency after switching.

The BLE module 2 and the mobile device 9 repeat the frequency switching process and the received phase acquisition process described above until they have collected received phases for all frequencies for which received phases should be acquired (for example, all channels available for data communication, that is, 0ch to 36ch). The BLE module 2 and the mobile device 9 may terminate the iterative process when they have collected the received phases for all predetermined required frequencies. The required number here may be the same as the number of data channels, or the required number may be set to larger or smaller than the number of data channels. When the number of frequencies used to collect the received phases increases, the accuracy of distance measurement can be increased, which will be discussed later. When the number of frequencies used to collect the received phases increases, the time required for the ranging communication and the power consumption may increase. The required number may be set to 3, 4, 5, 8, 10, 16, 37, 81, or any other number.

In S160, the BLE module 2 transmits a ranging end notification signal to the mobile device 9 when the BLE module has collected the required number of received phase for each frequency. The ranging end notification signal is a data signal for making a notification that the ranging communication is ended. The mobile device 9 switches to a normal data communication mode in response to receiving the ranging end notification signal. The normal data communication mode corresponds to a state in which predetermined data such as audio data can be transmitted and received. Alternatively, transmission and reception of the ranging end notification signal may be properly omitted. The mobile device 9 may be configured to return an Ack to the BLE module 2 in response to receiving of the ranging end notification signal.

In S170, the CS ranging unit F1 calculates a phase change coefficient (α) when collecting of the received phase for each frequency is ended. The phase change coefficient is a parameter indicating a change degree of the received phase according to the change in frequency. The phase change coefficient may also be referred to as a phase change degree, a phase shift amount, or a correlation coefficient between phase and frequency.

The phase shift coefficient is calculated based on the received phases observed at two arbitrary frequencies, for example, a first frequency and a second frequency. Suppose that the frequency difference, which is the difference between the first frequency and the second frequency, is defined as Δf. Suppose that the inter-frequency phase difference, which is the difference between the received phases observed at the first frequency and the received phase observed at the second frequency, is defined as Δφ. The phase change coefficient is defined as α. Then, Δf, Δφ and α satisfy the relationship α = Δφ/Δf. The inter-frequency phase difference (Δφ) is a difference between received phases monitored at two different frequencies. The inter-frequency phase difference can be referred to as a two frequency phase difference or a second-order phase difference. The inter-frequency phase difference corresponds to a displacement amount of a phase angle due to a change in the use frequency.

The CS ranging unit F1 of the present embodiment calculates a regression line showing the relationship between frequency and received phase based on the received phase for each frequency, and adopts the slope of regression line as the phase change coefficient. This is because the slope of regression line indicates the displacement amount of the received phase with respect to the frequency shift amount. The regression line can be calculated using various methods, such as the least squares method. When the regression line is represented in a form of y = ax + b, then the coefficient a of x corresponds to the slope of regression line. In the above equation, "x" is the variable corresponding to frequency, and "y" is the variable corresponding to the received phase. The regression line may also be referred to as an approximate straight line.

The CS ranging unit F1 may temporarily calculate the first regression line based on all of the monitored received phase data, exclude a value (called outlier) at which a distance from the temporarily calculated first regression line is equal to or greater than a predetermined value, and then recalculate the second regression line. In that case, the CS ranging unit F1 may use the slope of the second regression line as the phase change coefficient. As described above, the phase change coefficient used for ranging may be decided based on a regression line having data excluding outliers as a population. According to this configuration, the calculation accuracy of inter-frequency phase difference, and eventually, the distance measurement accuracy can be improved.

The CS ranging unit F1 may also calculate the inter-frequency phase difference (Δφ), the frequency difference (Δf), and the phase change coefficient for each combination of frequencies at which the received phases can be observed. The CS ranging unit F1 may use the average or median value of the phase change coefficients for respective frequency combinations as the phase change coefficient for distance calculation.

In S180, the CS ranging unit F1 calculates the device distance (D) using the phase change coefficient (α) generated based on received phase information at multiple frequencies. When the device distance is D, then the relationship between the frequency difference Δf and the inter-frequency phase difference (Δφ) satisfies D ∝ C·Δφ/(2π·Δf) = C·α/2π. In the above formula, the parameter "C" represents the propagation speed of radio waves (that is, 3 × 10^8 m/sec). The CS ranging unit F1 calculates the device distance based on the above relationship formula. For example, the CS ranging unit F1 can calculate the device distance using formula 1: D = k·C·α / 2π. The parameter k in formula 1 is a design value, and is set to 1.0 or 0.5. The value of parameter k can be decided by whether the transmission or received phase difference is calculated as a one-way phase change coefficient or as a reciprocating phase change coefficient. The CS ranging unit F1 stores the calculated device distance data in the memory 25.

In another embodiment, the CS ranging unit F1 calculates a provisional value (d) of the device distance using Δf and Δφ for each combination of frequencies, and adopts the average or median of the provisional values as the device distance. In this case, the provisional value (d) of the device distance for a given combination of frequencies can be calculated using d = k·C·Δφ/(2π·Δf).

Of the series of process shown in FIG. 6, the process performed by the BLE module 2 is carried out by the cooperation of the CS ranging unit F1 and the RF core 21. In the above example, BLE module 2 determines and notifies the execution condition for CS ranging, but the present disclosure is not limited to this configuration. The mobile device 9, rather than the BLE module 2, may determine the parameters for performing the ranging communication and transmit the ranging setting notification signal. In addition, the execution subject of each process can be properly interchanged. The above sequence may be performed with the mobile device 9 as a main execution subject (in other words, as a master).

The received signal strength acquisition unit F2 is configured to acquire data from the RF core 21 indicating the strength of received signal from the mobile device 9 for each frequency. While the BLE module 2 is in communication connected state with the mobile device 9, the BLE module periodically communicate data signals with the mobile device 9 for connection check purpose. The received signal strength acquisition unit F2 acquires the received signal strength data when the data signal for connection check purpose is received. The communication for connection check purpose can be performed at the connection interval. The communication for connection check may be performed every time channel hopping is performed.

The signal used to detect the received signal strength is not limited to the data signal for connection check. The signal used to detect the received signal strength may be a normal data signal or an advertising signal. The signal used to detect the received signal strength may also be a signal used for CS ranging communication. Hereafter, unless otherwise specified, received signal strength refers to the strength of signal transmitted from the mobile device 9.

The report processing unit F3 transmits, to the main controller, 11 the device distance calculated by the CS ranging unit F1 and the received signal strength data obtained by the received signal strength acquisition unit F2. The transmission of various types of data may be performed periodically. The report processing unit F3 may transmit various types of data based on a request from the main controller 11.

### (Interaction between mobile device and vehicle-mounted system)

The following will describe an interaction between the mobile device 9 and the vehicle-mounted system VS. Interaction between the mobile device 9 and the vehicle-mounted system VS takes place after the mobile device 9 has been registered (paired) as the owner device in the vehicle-mounted system VS. First, an example of the owner device registration process for registering (pairing) the mobile device 9 as the owner device in the vehicle-mounted system VS will be described.

In the owner device registration process, when the mobile device 9 is a communication terminal such as a smartphone, the user performs biometric authentication or enters a passcode on the mobile device 9. This allows the owner device registration process to confirm that the mobile device 9 is being operated by the authenticated user.

The user uses the mobile device 9 to request the start of owner device registration process to register the owner device in a management server (not shown). In response to this request, the management server will create a password. The generated password is sent to the mobile device 9 and the vehicle-mounted system VS via wireless communication.

In the vehicle-mounted system VS, when the main switch of the vehicle is turned on, a button to start pairing between the owner device and the vehicle-mounted system VS will be displayed, for example, on the multimedia screen located inside the vehicle. The pairing process begins when the user presses the pairing start button. In this case, the vehicle-mounted system VS may authenticate the user by instructing the user to hold a smart key with a short-range wireless communication function, such as NFC, close to the main switch. Alternatively, the user authentication may be performed by requesting the user to enter a passcode on a multimedia screen to indicate that the user is an authenticated user. The pairing start button may be displayed on the display 95 of the mobile device 9, instead of displaying on the multimedia screen arranged inside the vehicle.

When the pairing start button is operated by the user, an advertising signal is sent from the slave (ECU 1 or mobile device 9) to the central (mobile device 9 or ECU 1) in BLE communication. In BLE communication, the central device receives advertising signals from the slave device. Then, based on the password distributed by the management server, the central device verifies that the communication partner is legitimate and sends a connection request as a response to the advertising signal. In response to the slave device receiving the connection request from the central device, the BLE communication connection is established between the central device and the slave device.

After the BLE communication connection is established between the central device and the slave device, the central device and the slave device generate encryption keys for each other and exchange the encryption keys via the BLE communication. After the validity of exchanged encryption keys is verified, they are stored in a storage medium such as their respective storage devices. After pairing, the data signal of BLE communication is encrypted using the exchanged encryption key. This ensures the security of BLE communication between the ECU 1 and the mobile device 9.

The ECU 1 or the mobile device 9 generates a URSK (UWB Ranging Secret Key), which is a key used for UWB ranging communication, and shares the URSK via the BLE communication. The URSK can be used to create information that proves the communication partner in UWB ranging communication is the authenticated communication partner. By having the generated URSK codes exchanged between the ECU 1 and the mobile device 9, the ECU 1 can perform UWB ranging communication with the mobile device 9 as the communication partner. The ECU 1 registers and saves the generated URSK by associating the URSK with the ID of mobile device 9 (mobile device ID). The ECU 1 may confirm that the UWB ranging communication with the mobile device 9 is possible by actually performing the UWB ranging using the generated URSK.

The management server is notified that the mobile device 9 has been registered as the owner device with respect to the vehicle-mounted system VS of the vehicle Hv, and the owner device registration process is completed. After the owner device registration process is completed, the slave device (ECU 1 or mobile device9) in BLE communication starts transmission of an advertising signal. In BLE communication, the central device (mobile device 9 or ECU 1) starts scanning for the corresponding advertising signal. In the following description, suppose that the mobile device 9 is a slave device in BLE communication as an example.

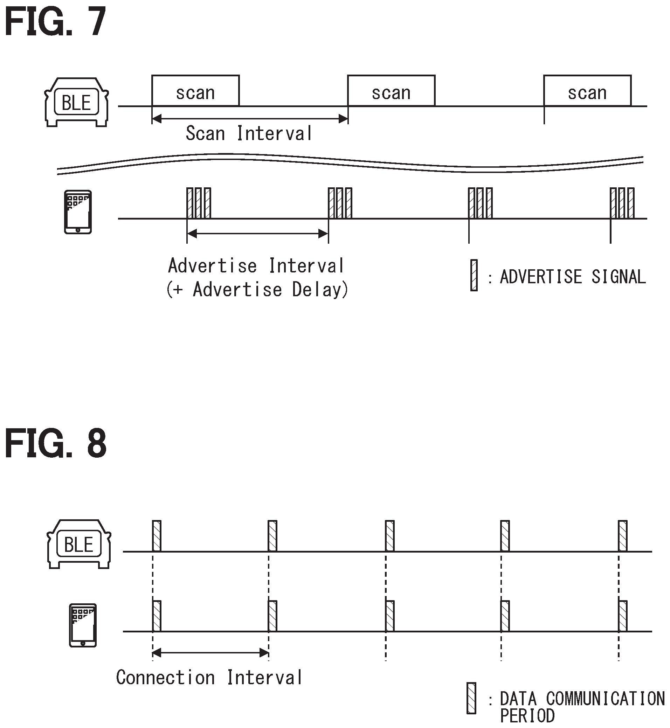

When the mobile device 9 and the vehicle-mounted system VS have not yet established a communication connection, as shown in FIG. 7, the mobile device 9 transmits an advertising signal at a predetermined interval, which is a sum of a predetermined advertising interval and a random duration (referred to as advertising delay). The BLE module 2 of the vehicle-mounted system VS enters a reception standby state at a predetermined scan interval and scans for advertising signal from the mobile device 9. The size of scan window corresponding to the length of duration for maintaining the reception standby state may be appropriately set.

The length of the scan interval and the advertising interval can also be set to various values. The various interval values may be set to allow for a quick connection in response to a user approaching toward the vehicle Hv. The advertising interval may be set to a value between 20 milliseconds and 400 milliseconds, such as 37.5 milliseconds, 50 milliseconds, 80 milliseconds, or 100 milliseconds. The advertising interval may also be set to a value exceeding 400 milliseconds, within the limits of compliance with the BLE standard. The advertising interval may be set to be shorter than the scan interval.

In response to the advertising signal from the mobile device 9, the vehicle-mounted system VS transmits a connection request, thereby establishing a communication connection between the mobile device 9 and the vehicle-mounted system VS. After a communication connection is established between the mobile device 9 and the vehicle-mounted system VS, the mobile device 9 and the BLE module 2 periodically communicate data via BLE communication at a predetermined connection interval, as shown in FIG. 8. The communication content may be various content such as communication connection check. The connection interval may be set to a value from 7.5 milliseconds to 200 milliseconds, such as 30 milliseconds or 40 milliseconds. The connection interval may also be set to a value exceeding 200 milliseconds within a range conforming to the BLE standard.

After establishing a communication connection between the mobile device 9 and the vehicle-mounted system VS, the ECU 1 determines whether to use UWB signal or BLE signal for detecting the position of the mobile device 9. In this case, the ECU 1 determines, as a general rule, that UWB signal is used to detect the position of mobile device 9. When the vehicle Hv, which is equipped with the vehicle electronic key system according to the present embodiment, is used in a country where the outdoor use of UWB communication is restricted, or if country information cannot be obtained from the TCU 7, the ECU 1 determines to use the BLE signal for detecting the position of mobile device 9. In the present embodiment, UWB communication corresponds to the first communication method, and BLE communication corresponds to the second communication method.

When the ECU 1 determines that the BLE signal is used for detecting the position of mobile device 9, the ECU 1 first determines whether the mobile device 9 supports CS ranging communication. For example, the ECU 1 can obtain information via BLE communication regarding whether the mobile device 9 supports CS ranging communication. Based on the acquired information, the ECU 1 can determine whether the mobile device 9 supports CS ranging communication. The determination of whether the mobile device 9 supports CS ranging communication may be performed in advance as part of the registration process when registering the mobile device 9 as the owner device. When the ECU 1 determines that the mobile device 9 supports CS ranging communication, the ECU 1 detects the position of mobile device 9 based on the CS ranging result using the BLE signal and the ranging result using the received signal strength of the BLE signal. The CS ranging communication may be initiated when the received signal strength of the BLE signal becomes equal to or larger than a predetermined strength threshold, or when the distance between the positions detected by GPS receivers falls equal to or shorter than a distance threshold. When any of the above-described conditions for starting CS ranging communication is satisfied, the ECU 1 can transmit a request to start CS ranging to the BLE module 2.

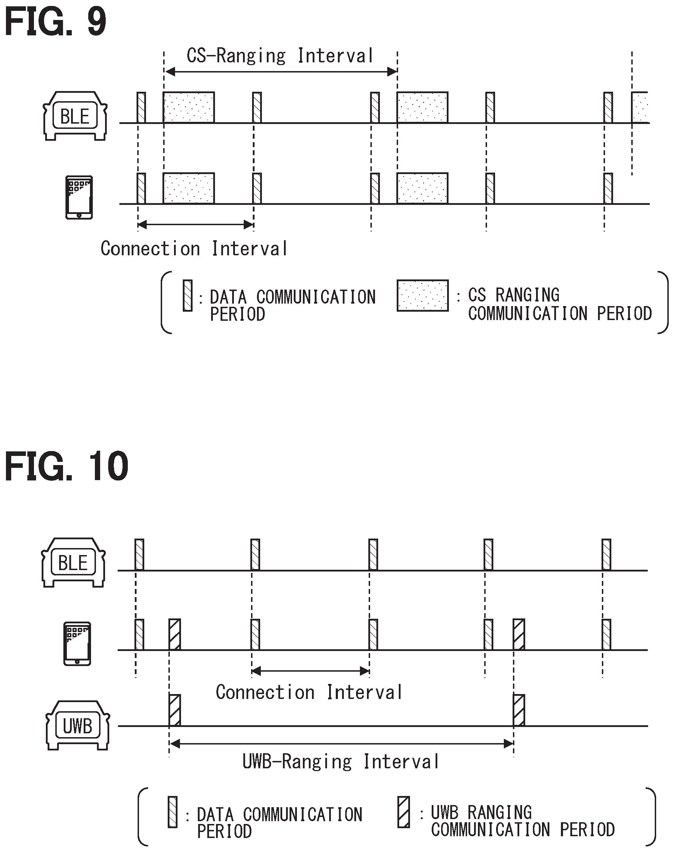

FIG. 9 shows an interaction between the mobile device 9 and the vehicle-mounted system VS when they perform CS ranging communication. The CS ranging interval, which is the interval at which the BLE module 2 performs CS ranging communication, can be set to, for example, twice or three times the connection interval. By setting the CS ranging interval longer than the periodic data communication execution interval, power consumption can be reduced. However, the CS ranging interval may be set the same as the connection interval. Note that CS-Ranging Interval shown in FIG. 9 indicates the CS ranging interval. Multiple CW signals can be communicated on different frequencies in a single CS ranging communication. A single CS ranging communication may be configured to involve communication of a single CW signal on a single frequency. The duration of a single CS ranging communication can be adjusted by factors such as the length of CW signal.

When the mobile device 9 and the vehicle-mounted system VS perform data communication and CS ranging communication via respective BLE modules 2, 97, as shown in FIG. 9, the ECU 1 may perform ranging process based on the received signal strength of the signal for data communication, and also perform the CS ranging by CS ranging communication. When the mobile device 9 does not support CS ranging communication, for example, as shown in FIG. 8, normal data communication is performed between the BLE module 2 and the mobile device 9, and the ranging is performed using the received signal strength of signal for that data communication.

The CS ranging communication may be terminated, for example, when the power of the mobile device 9 is turned off and the BLE communication is disconnected, or when the received signal strength of BLE signal decreases equal to or lower than a predetermined strength threshold. The strength threshold used when terminating CS ranging communication may be the same as or different from the strength threshold used to initiate the CS ranging communication. The CS ranging communication may be terminated when no action is taken on the vehicle for a predetermined period of time after the CS ranging communication has started. The CS ranging communication may be terminated when the user gets into the vehicle Hv and turns on the start switch of the vehicle. When any of the above-mentioned termination conditions for CS ranging communication is satisfied, the ECU 1 can send, to the BLE module 2, a request to terminate the CS ranging.

When the CS ranging communication is terminated in response to the user turning on the start switch, the CS ranging communication may be started again in response to the opening and closing of the door of vehicle Hv. This enables detection of the position for the mobile device 9 via CS ranging communication when the mobile device 9 is taken outside the vehicle while the vehicle is temporarily stopped with the start switch remaining on state.

FIG. 10 shows an interaction between the mobile device 9 and the vehicle-mounted system VS when they perform UWB ranging communication. As shown in FIG. 10, the ECU 1 periodically performs data communication using BLE and ranging communication using UWB with the mobile device 9. The UWB ranging interval, which is the interval at which the ECU 1 causes the UWB module 3 to perform UWB ranging communication, can be set to, for example, three or four times the connection interval. By increasing the UWB ranging interval in this way, power consumption can be reduced. Alternatively, the UWB ranging interval may be set the same as the connection interval. Note that UWB-Ranging Interval in FIG. 10 indicates the UWB ranging interval. A single UWB ranging communication may include multiple UWB ranging communications from respective UWB modules 3. The UWB ranging interval can be set to a value between 150 milliseconds and 400 milliseconds, for example, 180 milliseconds or 280 milliseconds. The UWB ranging interval may be set to be longer than the CS ranging interval. The UWB ranging interval may be set the same as or shorter than the CS ranging interval.

The position detection of the mobile device using the UWB signal described above may be initiated when the received signal strength of the BLE signal becomes equal to or larger than a predetermined strength threshold, or when the distance between the positions detected by GPS receivers falls equal to or shorter than a distance threshold. With this configuration, power consumption can be further reduced.

When any of the above-described conditions for starting UWB ranging communication is satisfied, the ECU 1 can transmit a request to start UWB ranging to the multiple UWB modules 3. In response to the UWB ranging start request, multiple UWB modules 3 each transitions from a sleep state to a wake-up state. Then, the multiple UWB modules 3 transmit UWB ranging signals. In other words, each of the multiple UWB modules 3 is in a sleep state while the UWB ranging is not being performed.

Similar to CS ranging communication, the UWB ranging communication may be terminated, for example, when the power of the mobile device 9 is turned off and the BLE communication is disconnected, or when the received signal strength of BLE signal decreases equal to or lower than a predetermined strength threshold. The strength threshold used when terminating UWB ranging communication may be the same as or different from the strength threshold used to initiate the UWB ranging communication. The UWB ranging communication may be terminated when no action is taken on the vehicle for a predetermined period of time after the UWB ranging communication has started. The UWB ranging communication may be terminated when the user gets into the vehicle Hv and turns on the start switch of the vehicle.

When any of the above-described conditions for ending UWB ranging communication is satisfied, the ECU 1 can transmit a request to end UWB ranging to the multiple UWB modules 3. In response to this end request, multiple UWB modules 3 each ends the UWB ranging communication. After the multiple UWB modules 3 end the UWB ranging communication, if a new request to start UWB ranging is not received within a predetermined period, the UWB modules 3 may be configured to enter sleep states.

After the UWB ranging communication is terminated in response to the user turning on the start switch, the UWB ranging communication may be started again in response to the opening and closing of the door of vehicle Hv. This enables detection of the user operation that the mobile device 9 has been taken outside the vehicle while the vehicle is temporarily stopped remaining the start switch in turned on state, by the UWB ranging communication,

### (Functions of Main Controller)

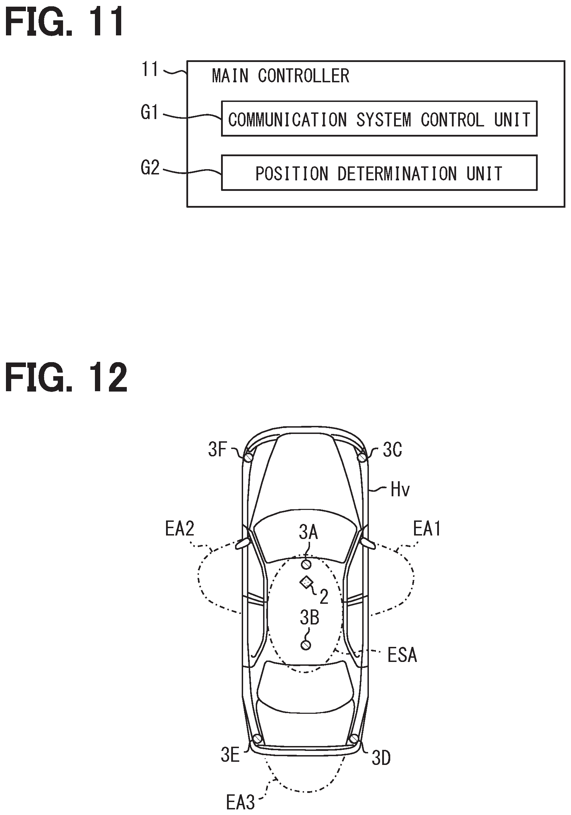

As shown in FIG. 11, the main controller 11 includes a communication system control unit G1 and a position determination unit G2, as functional blocks. The communication system control unit G1 is a software or hardware module that controls the operation of BLE module 2 and the UWB module 3, respectively. For example, the communication system control unit G1 causes the BLE module 2 to perform CS ranging process when obtaining of country information is failed (described later) or determining that the UWB module 3 cannot be used based on the obtained country information.

The communication system control unit G1 performs a cyclic measurement process that causes each of the multiple UWB modules 3 to perform the UWB ranging in sequence. The communication system control unit G1 periodically performs the cyclic measurement process when the BLE connection is established between the vehicle Hv and the mobile device 9 and execution of UWB ranging is in an enabled state. The communication system control unit G1 may set the start timing of the cyclic measurement process or dynamically change the cyclic measurement interval according to the value of received signal strength observed within immediate recent predetermined time period. Alternatively, the communication system control unit G1 may perform the cyclic measurement process in response to a detection of predetermined event that requires the position detection of the mobile device 9.

The position determination unit G2 detects the position of mobile device 9 by determining the device position relative to the vehicle Hv based on the device distance obtained in each UWB module 3 as a result of the cyclic measurement process, or based on the received signal strength ranging result and/or the CS ranging result. A position of device can be represented by one of multiple areas/zones preset with respect to the vehicle Hv, such as the engine start area ESA inside the vehicle, the entry area EA outside the vehicle, and the intermediate and remote areas outside the vehicle.

The entry area EA outside the vehicle may include, for example, a first entry area EA1 near the driver seat, a second entry area EA2 near the passenger seat, and a third entry area EA3 near the trunk, as shown in FIG. 12. Thus, the entry area EA refers to, for example, an area outside the vehicle where the distance from the driver seat, passenger seat, and trunk of vehicle Hv is less than a predetermined proximity determination value. The proximity determination value may be set to, for example, 1.0m, 1.5m, or 2m. The entry area EA is an area where the user can unlock/lock the doors, trunk, and other parts of the vehicle Hv. Regarding the unlocking of the vehicle Hv, only the door or trunk corresponding to each entry area may be unlocked, or all doors together with trunk may be unlocked in response to detecting presence of the mobile device 9 in one of the multiple entry areas. Regarding the locking of the vehicle Hv, when the mobile device 9 is present in one entry area and the user holding the mobile device 9 performs the locking operation, all doors and the trunk may be locked.

The remote area refers to a region where the distance from the vehicle Hv exceeds a predetermined remote determination value. The remote determination value is a parameter used to determine that the mobile device 9 is not present in the vicinity of the vehicle Hv. The remote determination value may be set to, for example, 5.0m, 6.0m, 10m, or 12m. The intermediate area refers to an area that is intermediate between the remote area and the entry area EA. The intermediate area may be referred to as welcome area that performs predetermined welcome control such as turning on vehicle exterior lighting in response to the mobile device 9 entering the intermediate area. The intermediate area may be an area where predetermined control, such as authentication by wireless communication with the mobile device 9, tracking of device position, and shortening of position determination cycle, is executed/started while the predetermined control is not executed when the mobile device 9 is present in the remote area. The intermediate area may also be referred to as a standby area, a peripheral area, or the like. The intermediate area may be an area where user can remotely park/retrieve the vehicle Hv.

The aforementioned entry area EA, the intermediate area, and the remote area are subdivisions of the area outside the vehicle. As shown in FIG. 12, the position determination unit G2 may determine whether the mobile device 9 is located inside the vehicle, such as the engine start area ESA.

As described above, the position determination unit G2 of the present embodiment determines the stay area of the mobile device, that is, the area where the mobile device 9 is located. In another embodiment, the position determination unit G2 may calculate the device position coordinates instead of/in addition to determination of the stay area. The device position coordinates refer to the position coordinates of the mobile device 9 in a two-dimensional/three-dimensional coordinate system with a predetermined portion of the vehicle Hv as the reference. The calculation of device position coordinates can be performed using a method similar to three-point positioning or multi-point positioning in the technical field of GPS and position estimation.

The main controller 11 transmits device position data, which is data indicating the determined device position of mobile device, to a designated ECU such as the body ECU 4. The main controller 11 may periodically update the device position data. The main controller 11 may also perform cyclic measurement process in response to an occurrence of predetermined event, and generate and update the device position data.

### (Process for detecting position of mobile device)

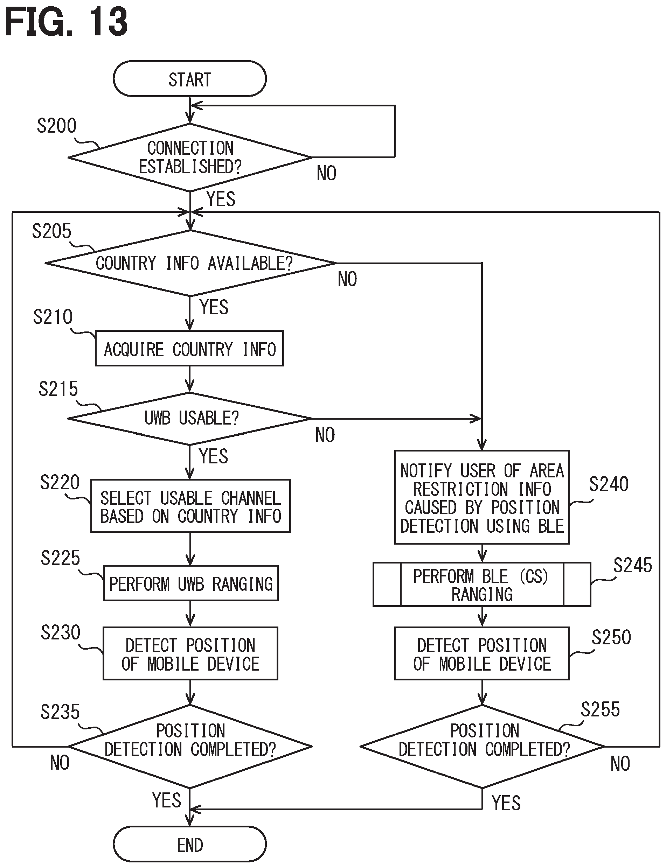

The following will describe a process for detecting the position of mobile device 9, which is performed in the vehicle-mounted system VS of the vehicle electronic key system using either the BLE module 2 or the UWB module 3, with reference to the flowchart in FIG. 13.

In S200, the BLE controller 23 or the ECU 1 determines whether a communication connection with the mobile device 9 is established. When the communication connection is established with the mobile device 9, the ECU 1 proceeds to S205 and determines whether country information is available from the TCU 7. Regarding UWB communication, outdoor use of UWB communication may be restricted in some countries. Even when the UWB communication is usable, the frequency band that can be used for outdoor UWB communication may be restricted in some countries. As a result, the frequency bands available for outdoor UWB communication will differ from country to country. If country information is not available from the TCU 7, it is not possible to determine whether UWB communication can be used outdoors or to check the permitted frequency bands for UWB communication. Therefore, if country information cannot be obtained, it is preferable to avoid using UWB communication. For example, when the vehicle Hv is parked in a parking lot inside a building, the TCU 7 may fail to communicate with the external network via the wireless module, and the GPS receiver may fail to receive GPS signals from satellites. When the ECU 1, through the communication with the TCU 7, becomes aware that the TCU 7 is in the above situation, the ECU 1 determines that it is impossible to obtain country information from the TCU 7 and proceeds to S240. When the ECU 1 is unable to communicate with the TCU 7 for any reason, the ECU 1 may also determine that it is impossible to obtain country information. When the ECU 1 determines that the country information is available through the communication with the TCU 7, the ECU 1 proceeds to S210.

In S210, the ECU 1 obtains the country information from the TCU 7. In S215, the ECU 1 determines whether the UWB ranging communication is available based on the acquired country information. The memory 13 of the main controller 11 of the ECU 1 has country-specific UWB communication regulation information, which is stored in advance. The UWB communication regulation information includes information indicating whether UWB communication is permitted for outdoor use, and also includes information on the channels (frequencies) that can be used for UWB communication. In S215, determining that the UWB is not usable, the ECU 1 proceeds to the S240. In S215, determining that the UWB is usable, the ECU 1 proceeds to S220.

In S220, the ECU 1 refers to the UWB communication regulation information stored in the memory 13 and selects a channel (frequency) that can be used for UWB communication based on the acquired country information. Then, in S225, the ECU 1 shares, with the mobile device 9, the setting information of the UWB communication including the selected channel, and then instructs each UWB module 3 to periodically perform UWB ranging process, that is, cyclic measurement process. Then, the ECU 1 acquires the device distance from each UWB module 3 as a result of the cyclic measurement process. In S230, the ECU 1 determines (detects) the position of the mobile device 9 relative to the vehicle Hv based on the acquired device distance from each UWB module 3. Although not shown in the flowchart of FIG. 13, once the ECU 1 determines the position of the mobile device 9, the ECU 1 transmits the determined position data of the mobile device 9 to the body ECU 4. The body ECU 4 can perform a predetermined control, such as unlocking/locking the vehicle Hv and turning on the power, based on the position data of the mobile device 9, which is provided by the ECU 1.

In S240, the ECU 1 determines the position of the mobile device 9, that is, the belonging area among the predetermined areas, using the BLE signal. When one or more of the multiple areas is restricted due to BLE communication, the ECU 1 notifies the user of area restriction information, for example, via BLE communication. This allows the user to recognize in advance in which area the position of the mobile device 9 cannot be detected, or in other words, in which area the approach of the mobile device 9 cannot be detected.

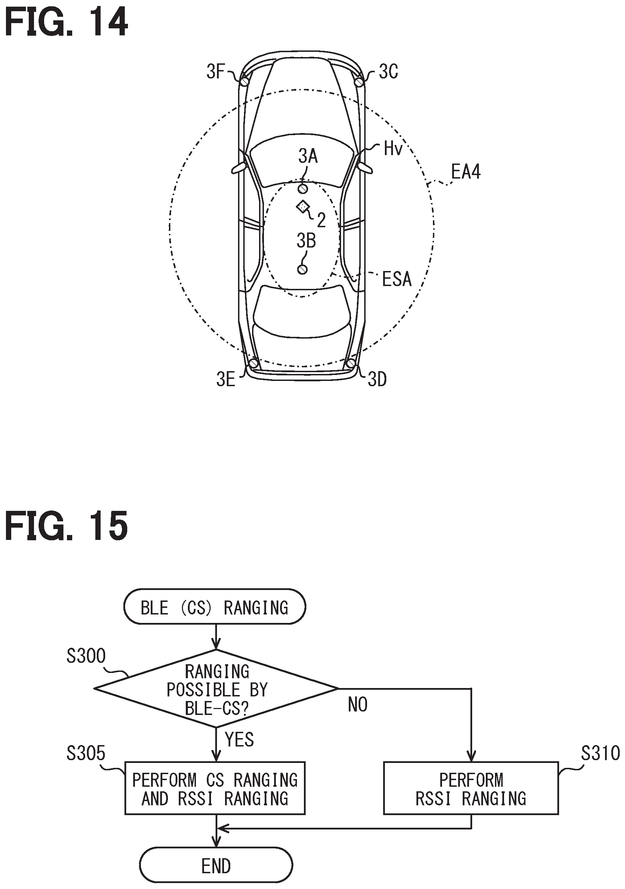

In the present embodiment, one BLE module 2 is installed in the vehicle Hv. Therefore, whether the CS ranging is performed or ranging process based on received signal strength is performed, the determined area will be an area approximately centered on the BLE module 2, as shown in FIG. 14. For example, in the example shown in FIG. 14, the BLE module 2 is approximately at the center, and a fourth entry area EA4 and an engine start area ESA are defined accordingly. In this case, when the fourth entry area EA4 is expanded to include an entry area that allows the trunk to be opened and closed, a problem arises in that the entry area for the driver seat and passenger seat becomes too large. Therefore, as shown in the example of FIG. 14, when determining the position of the mobile device 9 as one of the areas using the BLE signal, the area of the mobile device to be determined may be restricted compared to determining the position, that is, the area of the mobile device 9 using the UWB signal. In the example shown in FIG. 14, the third entry area EA3 shown in FIG. 12 is restricted among the areas shown in FIG. 12. The restricted entry area may differ depending on the installation location of the BLE module 2 in the vehicle Hv.

In S245, the ECU 1 periodically performs the ranging process to measure the device distance from the BLE module 2 to the mobile device 9 using the BLE signal. Before executing the ranging process to measure the device distance, the ECU 1 performs a process to determine a method for measuring the distance to the mobile device 9 using the BLE signal. The flowchart in FIG. 15 shows an example of the process for determining the method for measuring the distance to the mobile device 9.

In S300, the ECU 1 determines whether the mobile device 9 supports CS ranging communication and whether CS ranging is possible, based on a signal received from the mobile device 9 indicating whether the mobile device 9 supports or does not support CS ranging communication, or the response from the mobile device 9 to an inquiry about whether the mobile device 9 supports CS ranging communication. In response to the ECU 1 determining that the CS ranging is possible, the ECU 1 proceeds to S305. In response to the ECU 1 determining that the CS ranging is not possible, the ECU 1 proceeds to S310. In a case where the mobile device 9 is the master device, the mobile device 9 may determine whether the BLE module 2 of the vehicle-mounted system VS supports the CS ranging communication.

In S305, the ECU 1 decides to perform both CS ranging using the BLE signal and distance measurement using the received signal strength of the BLE signal as methods for measuring the distance to the mobile device 9, and periodically performs CS ranging and received signal strength distance measurement. This is because, in addition to the CS ranging, ranging using the received signal strength can be performed to improve the accuracy of position detection for the mobile device 9. For example, by periodically performing CS ranging and ranging using received signal strength, the ECU 1 is able to determine that the mobile device 9 is inside the vehicle when (i) the received signal strength is equal to or greater than a strength threshold indicating that the mobile device 9 is inside the vehicle, and (ii) the CS ranging result indicates that the mobile device 9 is inside the vehicle (for example, within 1 m from the BLE module 2). However, ECU 1 may be configured to perform only CS ranging without performing ranging using received signal strength. In S310, the ECU 1 decides to perform distance measurement using the received signal strength of the BLE signal as a method for measuring the distance to the mobile device 9, and periodically performs distance measurement using received signal strength.

In S250 of the flowchart in FIG. 13, the ECU 1 determines (detects) the position of the mobile device 9 relative to the vehicle Hv based on the result of CS ranging and the distance measurement using received signal strength, or based on the result of distance measurement using received signal strength. In this case, as described above, only the distance from one BLE module 2 to the mobile device 9 is measured. Therefore, the position of the mobile device 9 is detected in a manner that whether the mobile device belongs to the fourth entry area EA4 or the engine start area ESA, which are approximately centered around the BLE module 2, as shown in FIG. 14. After the ECU 1 determines the position of the mobile device 9, the ECU 1 transmits the determined position data of the mobile device 9 to the body ECU 4. The body ECU 4 can perform a predetermined control, such as unlocking/locking the vehicle Hv and turning on the power, based on the position data of the mobile device 9, which is provided by the ECU 1.

In S235 and S255 of the flowchart in FIG. 13, the ECU 1 determines whether the position detection of the mobile device 9 is completed. For example, the ECU 1 may determine that the position detection of the mobile device 9 is completed when the vehicle Hv stops, the occupant disembark, the vehicle Hv is locked, the mobile device 9 moves away from the vehicle, and position detection of the mobile device 9 becomes impossible. When the position detection of the mobile device 9 is not yet completed, the ECU 1 returns to S205 and repeats the process described above. This allows country information to be acquired repeatedly (periodically), and a proper communication method can be selected according to the acquired country information.

### (Second Embodiment)

### (Overview of the vehicle electronic key system according to second embodiment)

The following will describe a position detection system, a position detection method, and a vehicle electronic key system to which a computer is applied according to a second embodiment of the present disclosure. The vehicle electronic key system according to the present embodiment is configured in the same manner as the vehicle electronic key system according to the first embodiment described above. Therefore, detailed description of the configuration of the vehicle electronic key system according to the present embodiment will be omitted.

In the vehicle electronic key system according to the first embodiment described above, when detecting the position of the mobile device 9, the system determines whether to use the result of ranging using BLE signal or the result of ranging using UWB signal, based on the country information acquired from the TCU 7. In the vehicle electronic key system according to the present embodiment, when at least one of the multiple UWB modules 3 (anchors 3A to 3F) becomes abnormal and whether the abnormal UWB module belongs to the required area near the door of driver seat, the system selects one result between the result of ranging using BLE signal or result of ranging using UWB signal to detect the position of the mobile device 9.

### (Process for detecting position of mobile device)

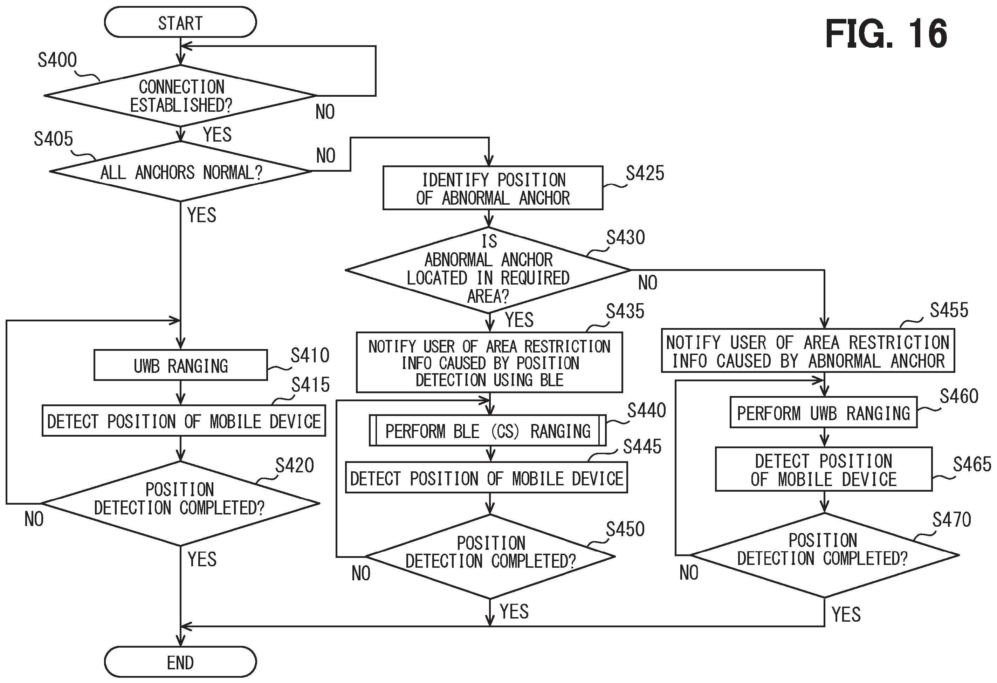

The following will describe a process for detecting the position of mobile device 9, which is performed in the vehicle-mounted system VS of the vehicle electronic key system using either the BLE module 2 or the UWB module 3, with reference to the flowchart in FIG. 16.

In S400, the BLE controller 23 or the ECU 1 determines whether a communication connection with the mobile device 9 is established. When the communication connection is established with the mobile device 9, the ECU 1 proceeds to S405 and determines whether all anchors of the UWB module 3 (for example, UWB modules 3A to 3F in FIG. 4) are operating normally. As mentioned above, with respect to the UWB module 3, if the ECU 1 determines that the response signal, which is received in response to a request to transmit the UWB ranging result, is an invalid data frame, the ECU 1 can assume that a malfunction has occurred in the UWB module 3 to which the request signal has been sent. When the ECU 1 fails to receive the response signal within a predetermined period after sending the request signal to the UWB module 3, the ECU 1 may assume that a malfunction has occurred in the UWB module 3 to which the request signal has been sent. Each UWB module 3 may be provided with a malfunction diagnosis circuit to detect malfunction such as disconnection or short circuit. The ECU 1 may assume that a malfunction has occurred in the corresponding UWB module 3 when the ECU 1 receives notification about malfunction from the UWB module 3.

When the ECU 1 determines that all anchors 3A to 3F of UWB module 3 are functioning normally without malfunction, the ECU 1 proceeds to S410. When the ECU 1 determines that at least one of the multiple anchors 3A to 3F is abnormal, the ECU proceeds to S425. The process executed in S410, S415, and S420 is the same as the process executed in S225, S230, and S235 in the flowchart of FIG. 13, so detailed description is omitted.

In S425, the ECU 1 identifies the installation position of the abnormal anchor. For example, the ECU 1 stores a table indicating the installation positions of each anchor 3A to 3F. By referring to this table, the ECU 1 can identify the installation position of the abnormal anchor. Then, in S430, the ECU 1 determines whether the abnormal anchor is used to determine whether the mobile device 9 is located in the required area near the door of driver seat.

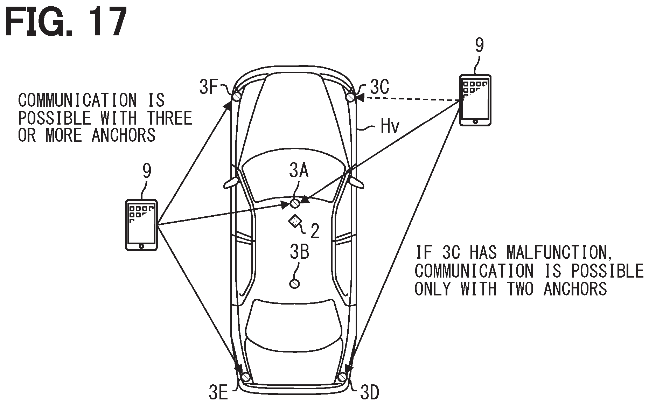

Suppose that the anchor 3C of the UWB module 3 has malfunction as shown in FIG. 17. In this case, the ECU 1 cannot obtain the correct ranging result from the anchor 3C to the mobile device 9. Therefore, as shown in FIG. 17, when the mobile device 9 approaches the vehicle Hv from an area near the abnormal anchor 3C, the ECU 1 obtains the ranging result from the two normal anchors 3A and 3D. As a result, the ECU 1 may fail to specify the position of the mobile device 9, and therefore may fail to correctly detect the position of the mobile device 9. In particular, when the abnormal anchor 3C is used to determine whether the mobile device is located in the entry area set near the driver seat, there is a possibility that the ECU may fail to detect the approach of user holding the mobile device 9 toward the driver seat of vehicle Hv. In this case, even when the user is near the door of driver seat or attempts to unlock the door of driver seat, the unlocking of door may be failed. This may significantly impair user convenience.

Therefore, in the vehicle electronic key system according to the present embodiment, the area near the door of driver seat is designated as the required area, that is, mandatory area. Further, the ECU 1 determines whether the abnormal anchor is a mandatory anchor that is used to determine whether the mobile device is located in the area near the door of driver seat. In response to determining that the abnormal anchor is the mandatory anchor, which is used to determine whether the mobile device is located in the area near the driver seat, the ECU 1 assumes that the abnormal anchor cannot perform wireless communication with the mobile device 9 using UWB communication. Then, the ECU 1 proceeds to S435. In response to determining that the abnormal anchor is not the mandatory anchor, which is used to determine whether the mobile device is located in the area near the driver seat, the ECU 1 assumes that the abnormal anchor can perform wireless communication with the mobile device 9 using UWB communication. Then, the ECU 1 proceeds to S455. The process executed in S435, S440, S445, and S450 is the same as the process executed in S240, S245, S250, and S255 in the flowchart of FIG. 13, so detailed description is omitted.

In S455, the ECU 1 notifies the user, for example via BLE data communication, of the area where the position of the mobile device 9 cannot be specified by UWB ranging due to the abnormal anchor and access restricted area to the vehicle Hv due to the abnormal anchor, as area restriction information. This allows the user to know in advance that there is an area where user's approach to the vehicle Hv cannot be detected, and to take appropriate measures, such as avoiding the restricted area when approaching the vehicle. In S460, ECU 1 instructs each UWB module 3 to periodically perform UWB ranging process, since the abnormal anchor is not used to determine whether the mobile device is located in the required area near the driver seat. The process executed in S460, S465, and S470 is the same as the process executed in S225, S230, and S235 in the flowchart of FIG. 13, so detailed description is omitted.

### (Third Embodiment)

### (Overview of the vehicle electronic key system according to third embodiment)

The following will describe a position detection system, a position detection method, and a vehicle electronic key system to which a computer is applied according to a third embodiment of the present disclosure. The vehicle electronic key system according to the present embodiment is configured in the same manner as the vehicle electronic key system according to the first embodiment described above. Therefore, detailed description of the configuration of the vehicle electronic key system according to the present embodiment will be omitted.

In the vehicle electronic key system according to the above-described second embodiment, when at least one of the multiple anchors of the UWB module 3 becomes abnormal, whether the abnormal anchor belongs to the required area near the door of driver seat, the system selects one result between the result of ranging using BLE signal or result of ranging using UWB signal to detect the position of the mobile device 9. The vehicle electronic key system according to the present embodiment changes the method for detecting the position of the mobile device 9 in response to a possibility that a malfunction occurs in at least one of the multiple anchors of the UWB module 3 and the abnormal anchor may interrupt obtaining of the correct ranging result from the mobile device 9.

### (Process for detecting position of mobile device)

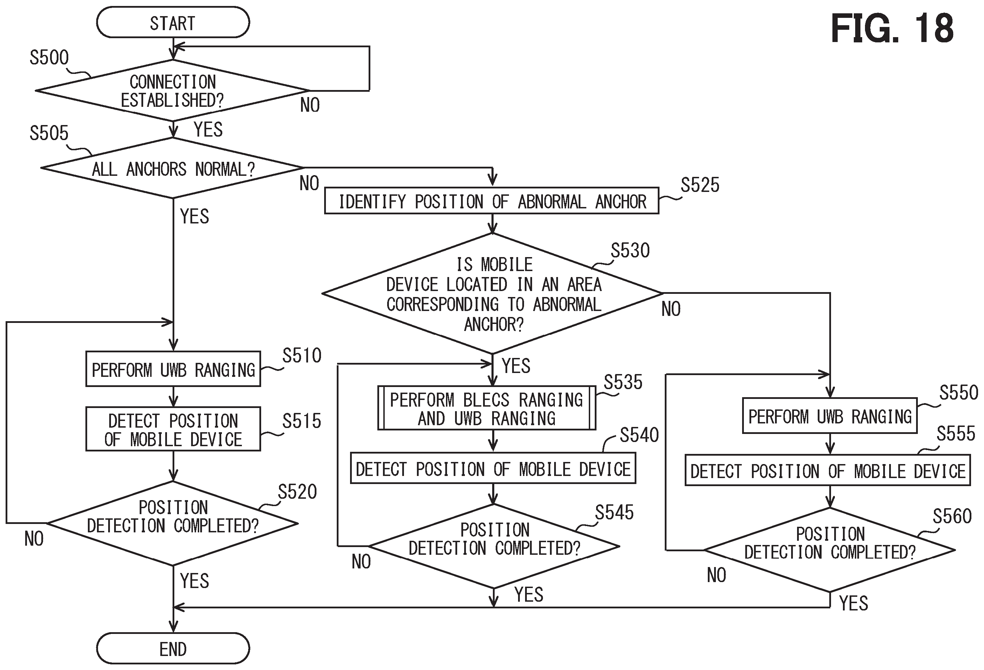

The following will describe a process for detecting the position of mobile device 9, which is performed in the vehicle-mounted system VS of the vehicle electronic key system using either the BLE module 2 or the UWB module 3, or using both the BLE module and the UWB module, with reference to the flowchart in FIG. 18.

The process executed in S500, S505, S510, S515, S520, and S525 is the same as the process executed in S400, S405, S410, S415, S420, and S425 in the flowchart of FIG. 16, so detailed description is omitted.

In S530, the ECU 1 determines whether the mobile device 9 is located near or within the area to which the abnormal anchor belongs. For example, the ECU 1 can obtain GPS position information from the mobile device 9 and compares the GPS position information of the vehicle Hv with the ranging information to determine an approximate position of the mobile device 9 relative to the vehicle Hv. Alternatively, as shown in FIG. 17, when one of the multiple anchors has malfunction, the approximate position of the mobile device 9 relative to the vehicle Hv can be determined through UWB ranging communication with the remaining two normal anchors. When the position of the mobile device 9, as specified in this way, is determined to be near or within the area corresponding to the abnormal anchor, that is the abnormal anchor is used to determine whether the mobile device belongs to the corresponding area or not, the ECU 1 proceeds to S535. When the ECU 1 determines that the position of the mobile device 9 is not near or within the area corresponding to the abnormal anchor, the ECU 1 proceeds to S550.

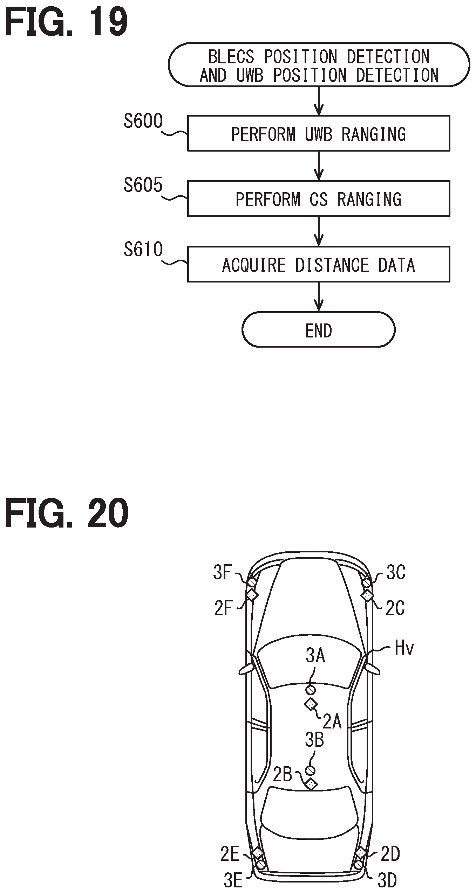

In S535, the ECU 1 instructs the BLE module 2 and the UWB module 3 to perform periodic CS ranging and UWB ranging. Specifically, as shown in the flowchart in FIG. 19, in S600, the ECU 1 instructs multiple UWB modules 3 to periodically perform UWB ranging, that is, to begin periodic execution of cyclic measurement process. In S605, the ECU 1 instructs the BLE module 2 to start periodic execution of CS ranging at a timing when UWB ranging by the UWB module 3 is not being performed. The BLE module 2 can acquire, from the ECU 1, the timing when the UWB ranging is not being performed by the UWB module 3. When the mobile device 9 does not support CS ranging communication, the ECU 1 instructs the BLE module 2 to periodically perform distance measurement using received signal strength.

In S610, the ECU 1 acquires UWB ranging results from multiple UWB modules 3, and also acquires CS ranging results or results of ranging using received signal strength from the BLE module 2. In this way, the ECU 1 acquires CS ranging results or received signal strength ranging results in addition to the UWB ranging results. For example, even when one UWB module 3 has malfunction and result of UWB ranging cannot be obtained from the abnormal UWB module, the missing part can be compensated for by CS ranging or received signal strength ranging. Therefore, even when a malfunction occurs in the UWB module 3, the ECU 1 is still able to detect the position of the mobile device 9 with high accuracy in S540 of the flowchart in FIG. 18. The process executed in S545, S550, S555, and S560 of the flowchart shown in FIG. 18 is the same as the process executed in S450, S460, S465, and S470 of the flowchart shown in FIG. 16, so detailed description is omitted.

### (Modifications)

One exemplary embodiment of the present disclosure is explained above. The present disclosure is not limited to the above-described embodiment, and can be implemented by various modifications without departing from the spirit of the present disclosure.

### (First modification in System Configuration)

In the embodiments described above, the BLE module 2 is located outside the housing of the ECU 1. The present disclosure is not limited to this configuration. For example, the BLE module 2 may be located inside the housing of the ECU 1.

### (Second modification in system configuration)

The vehicle-mounted system VS may have multiple BLE modules 2A to 2F as shown in FIG. 20. In the example shown in FIG. 20, multiple BLE modules 2A to 2F are arranged in close proximity to multiple UWB modules 3A to 3F. In this case, when one of the UWB modules 3 has malfunction, the BLE module 2, which is arranged close to the abnormal UWB module 3, may be configured to perform CS ranging. Then, the position of the mobile device 9 may be detected based on the UWB ranging result from the normal UWB module 3 and the CS ranging result from the BLE module 2. Alternatively, when one of the UWB modules 3 has malfunction, multiple BLE modules 2 may be used to perform CS ranging, and the position of the mobile device 9 may be detected based on the CS ranging results. The position of the mobile device 9 may be calculated based on the UWB ranging results from normal UWB modules 3, while simultaneously calculating the position of the mobile device 9 based on the CS ranging results from multiple BLE modules 2, and the final position of the mobile device 9 may be determined based on the two calculated positions of the mobile device 9. For example, when the calculated two positions of the mobile device 9 are equivalent to one another, the calculated position can be determined as the final position of the mobile device 9. When the calculated two positions of the mobile device 9 do not match with one another, the position of the mobile device 9 based on the CS ranging results from multiple normally functioning BLE modules 2 can be determined as the final position of the mobile device 9. In a configuration where multiple BLE modules 2 are used to perform CS ranging, one BLE module 2 may distribute the channel information and timing information used for CS ranging process to the other BLE modules 2, thereby enabling the other BLE modules 2 to intercept (sniffer) the CW signal transmitted from the mobile device 9.

In BLE communication, frequency hopping occurs after a communication connection is established, so normally, only the BLE module 2 that is connected can capture data signal from the mobile device 9. With sniffing technology, by providing channel information and timing information to other BLE modules 2, the other BLE modules 2 can also capture data signal and CW signal from the mobile device 9. As a result, other BLE modules 2 can detect the received signal strength, received phase, received time, or the like from the mobile device 9 without establishing communication connection with the mobile device 9. Therefore, the configuration using sniffing technology has the advantage that multiple BLE modules 2 can perform CS ranging process in parallel.

### (Third modification in system configuration)

In the embodiments described above, the ECU 1 is configured as an independent electronic control unit in the vehicle-mounted system VS. The present disclosure is not limited to this configuration. For example, the functions of ECU 1 may be integrated with another ECU configured to perform different functions.

### (Modification of UWB ranging)

In the embodiment described above, the UWB module 3 measures the RTT, which is the elapsed time from the transmission time of UWB signal to reception of a response signal from the mobile device 9, and calculates the device distance based on the RTT. In addition to measuring RTT, or as an alternative to measuring RTT, the UWB module 3 can also measure the arrival angle and arrival time difference of the UWB signal, and detect the position of the mobile device 9 based on the measured arrival angle and arrival time difference. For example, if the system is configured to measure the arrival angle of the UWB signal in addition to measuring the RTT of the UWB signal, it becomes possible to detect the position (or area) of the mobile device 9 around the vehicle Hv with smaller number of UWB modules 3.

### (Supplementary information on how to obtain single-frequency phase difference)

The BLE module 2 may acquire the single frequency phase difference for each frequency by the active two-way method or the passive two-way method, and calculate the inter-frequency phase difference using the single frequency phase difference. An outline of the active two-way method and the passive two-way method will be described.

The active two-way method is a method in which an initiator and a reflector mutually transmit and receive a CW signal to detect a phase difference between a transmission signal and a received signal, and a single frequency phase difference is specified using the two phase differences. The active two-way system includes a step in which an initiator and a reflector mutually transmitting and receiving CW signals to each other, and a step in which the reflector transmitting the observed received phase (θr) to the initiator.

The initiator is a device that initiates communication, in other words, a device that requests a response. The reflector is a device that returns a response. In the above embodiment, the BLE module 2 corresponds to the initiator, and the mobile device 9 corresponds to the reflector.

Suppose that the initial phase of the initiator is δi, the initial phase of the reflector is δr, the single-frequency phase difference that should be observed depending on the distance between the initiator and the reflector is φ, and the target frequency is f, then these parameters satisfy a relationship θr = φ + δi - δr and θi = φ - δi + δr. Based on this relationship, the average of θi and θr is the single-frequency phase difference (φ), in which the initial phase components of the initiator and reflector are cancelled out respectively. The active two-way method corresponds to a method of calculating an average value of the received phase at the initiator and the received phase at the reflector as a single frequency phase difference. Since a phase difference due to one-way propagation assumed, the average value of θi and θr is used as the single-frequency phase difference. As another aspect, in a case where a phase difference due to reciprocating propagation is assumed as the single frequency phase difference, the single frequency phase difference can be obtained by θi+θr.

The passive two-way method is also a method in which the initiator and the reflector transmit and receive the CW signal to and from each other. The difference from the active two-way method is that the reflector reflects the received phase of the CW signal transmitted from the initiator on the initial phase of the transmission signal, and then transmits the signal. For example, when the received phase at the reflector is θr, a CW signal expressed as z(t) = A·exp{-i(ωt+θr+2πn)} is transmitted. Herein, A represents amplitude. Herein, ω is the angular frequency corresponding to the target frequency (f), and has the relationship ω = 2πf. Herein, n is a natural number and corresponds to the interval between receiving of CW signal by the reflector and transmission of CW signal. According to this method, the received phase monitored by the initiator does not include the initial phase component of the reflector. The received phase observed by the initiator will be the same value as when receiving a CW signal that has been reflected back by a reflective surface, such as a wall. As a result, the initiator can calculate the single frequency phase difference without acquiring the received phase from the reflector. The passive two-way method has an advantage that the reflector does not need to transmit the received phase message, as compared with the active two-way method. As described above, the single frequency phase difference and the inter-frequency phase difference can be executed in various methods.

### (Modification of CS ranging)

The BLE controller 23 may calculate the device distance using RTT instead of, or in addition to, the inter-frequency phase difference. The RTT measured by the BLE controller 23 is the time from the transmission of a predetermined BLE signal requesting a response until the reception of a response signal from the mobile device 9. Transmitting and receiving signals for measuring RTT is also an example of CS ranging communication. Calculating the phase change coefficient or RTT is essentially equivalent to calculating the device distance. Therefore, the process of generating data indicating device distance, such as a phase change coefficient or RTT, based on the phase of the signal received from the mobile device 9 and the time of flight, is also included in the concept of CS ranging. Calculating the distance also includes generating data indirectly indicating the distance.

### (Modification of communication method)

The communication method between the BLE module 2 and the mobile device 9 is not limited to BLE. The communication method may adopt Bluetooth Classic or a different method. The wireless communication compliant to Bluetooth includes both BLE communication and communication compliant to Bluetooth Classic.

### (Application target of the present disclosure)

The present disclosure is applicable to vehicles traveling on a road. In other words, the present disclosure can be installed in multiple vehicles capable of traveling on a road, including not only four-wheeled vehicles but also two-wheeled vehicles, three-wheeled vehicles, and vehicles with more than four wheels. Except the application on vehicles, the present disclosure can be applied to a situation where it is necessary to detect a position of a user holding the mobile device 9.

### (Note 1)

### (Technical Idea 1)

A position detection system for detecting a position of a mobile device (9) relative to an object (Hv) includes: a first communication unit (3) equipped to the object and configured to perform a wireless communication with the mobile device using a first communication method; a second communication unit (2) equipped to the object and configured to perform a wireless communication with the mobile device using a second communication method, the second communication method being different from the first communication method; and a computer (1) configured to execute a process to decide the position of the mobile device relative to the object based on a first communication signal wirelessly communicated between the first communication unit and the mobile device and/or a second communication signal wirelessly communicated between the second communication unit and the mobile device. The first communication method is ultra-wideband (UWB) communication. The computer includes a determination unit (S205, S215, S405, S430, S505) configured to determine whether the wireless communication with the mobile device can be performed using the first communication unit, and a decision unit (S250, S445, S465, S540, S555) configured to decide the position of the mobile device relative to the object using the second communication signal in response to the determination unit determining that the wireless communication with the mobile device cannot be performed using the first communication unit.

### (Technical Idea 2)

In the position detection system according to technical idea 1, the second communication method is Bluetooth low energy channel sounding (BLE-CS) communication.

### (Technical Idea 3)

In the position detection system according to technical idea 2, the BLE-CS communication transmits and receives continuous wave (CW) signals having periodically changing frequencies. The decision unit is configured to decide the position of the mobile device based on a received phase difference of the CW signals having different frequencies.

### (Technical Idea 4)

The position detection system according to any one of technical ideas 1 to 3, further includes a country information acquisition unit (S210) configured to acquire country information indicating a country to which a position of the object belongs. The determination unit (S215) is configured to determine, based on the country information acquired by the country information acquisition unit, whether the wireless communication with the mobile device can be performed using the first communication unit.

### (Technical Idea 5)

In the position detection system according to technical idea 4, in a case where the country information acquisition unit fails to acquire the country information, the determination unit (S205) determines that the wireless communication with the mobile device cannot be performed using the first communication unit.

### (Technical Idea 6)

The position detection system according to technical idea 4 or 5, further includes a frequency decision unit (S220) configured to, in response that the country information acquisition unit succeeds in acquiring of the country information and the determination unit determines that the wireless communication with the mobile device can be performed using the first communication unit based on the country information that is acquired, decide a frequency band or a frequency channel to be used in the wireless communication according to the first communication method based on the country information that is acquired.

### (Technical Idea 7)

In The position detection system according to any one of technical ideas 4 to 6, the country information acquisition unit is configured to repeatedly execute a process for acquiring the country information.

### (Technical Idea 8)

In the position detection system according to any one of technical ideas 4 to 7, the decision unit is configured to decide the position of the mobile device relative to the object using only the second communication signal when the determination unit determines that the wireless communication with the mobile device cannot be performed using the first communication unit based on the country information or a failure in acquiring of the country information.

### (Technical Idea 9)

In the position detection system according to any one of technical ideas 1 to 3, the first communication unit includes multiple anchors (3A to 3F) equipped to the object at different portions, each of the multiple anchors is configured to perform the wireless communication with the mobile device, and when at least one of the multiple anchors has a malfunction, the determination unit (S405, S505) determines that the wireless communication with the mobile device cannot be performed using the first communication unit.

### (Technical Idea 10)

In the position detection system according to technical idea 9, when at least one of the multiple anchors has the malfunction and thus the determination unit (S505) determines that the wireless communication with the mobile device cannot be performed using the first communication unit, the decision unit (S540) decides the position of the mobile device relative to the object based on the first communication signal acquired by the remaining of the multiple anchors operating normally and the second communication signal.

### (Technical Idea 11)

In the position detection system according to technical idea 9 or 10, the decision unit (S540, S555) decides the position of the mobile device based on the first communication signal in an area where the position of the mobile device can be determined based on the first communication signal acquired by the wireless communication using the remaining of the multiple anchors operating normally. The decision unit (S540, S555) decides the position of the mobile device based on the second communication signal in an area where the position of the mobile device is determined based on the first communication signal acquired by the wireless communication using the at least one of the multiple anchors, which has the malfunction.

### (Technical Idea 12)

In the position detection system according to technical idea 9, the multiple anchors are classified into a mandatory anchor, which is used to determine whether the position of the mobile device belongs to a mandatory area, and a non-mandatory anchor, which is not used to determine whether the position of the mobile device belongs to the mandatory area, depending on an equipped location on the object. When the at least one of the multiple anchors, which has the malfunction, is the non-mandatory anchor, the determination unit (S430) determines that the wireless communication with the mobile device can be performed using the first communication unit and the decision unit (S465) decides the position of the mobile device relative to the object based on the first communication signal. When the at least one of the multiple anchors, which has the malfunction, is the mandatory anchor, the determination unit determines that the wireless communication with the mobile device cannot be performed using the first communication unit and the decision unit (S445) decides the position of the mobile device relative to the object based on the second communication signal.

### (Technical Idea 13)

In the position detection system according to technical idea 12, the object is a vehicle, and the mandatory anchor is located near a driver seat of the vehicle. The first communication signal in the wireless communication using the mandatory anchor is used to determine the position of the mobile device in an area near the driver seat of the vehicle.

### (Note 2)

Each of the various flowcharts illustrated in the present disclosure is an example, and the number of steps constituting the flowchart and the execution order of the processing can be appropriately changed. The terms used in the present disclosure, such as "wireless signal," "BLE signal," "data," "message," "packet," "frame," "package," "dataset," and "information," may be interpreted interchangeably.

The device, the system and the method there of, which have been described in the present disclosure, may be implemented by a dedicated computer which constitutes a processor programmed to execute one or more functions corresponding to th computer program. The device and the method thereof described in the present disclosure may be implemented by a dedicated hardware logic circuit. The device and the method thereof described in the present disclosure may be implemented by one or more dedicated computers which is constituted by combinations of a processor for executing computer programs and one or more hardware logic circuits. For example, partial or all of the functions of the BLE controller 23 may be implemented as hardware circuits. A configuration in which a certain function is implemented by hardware logic circuitry includes a configuration in which the function is implemented using one or more ICs or the like. As the processor (for example, arithmetic core), a CPU, an MPU, a GPU, a DFP (Data Flow Processor), or the like can be adopted. Partial or all of the functions of the BLE controller 23 may be implemented using a system-on-chip (SoC), an integrated circuit (IC), or a field-programmable gate array (FPGA). The concept of IC includes ASIC (Application Specific Integrated Circuits). The computer program described above may be stored in a computer-readable non-transitory tangible storage medium as instructions to be executed by a computer. As a storage medium for storing the computer program, a hard disk drive (i.e., HDD), a solid state drive (i.e., SSD), a flash memory, or the like can be adopted. In the present disclosure, a program for causing a computer to function as the BLE controller 123 or the main controller 11, and a form of a non-transitory tangible storage medium such as a semiconductor memory in which the program is stored are also included in the scope of the present disclosure.

## Claims

1. A position detection system for detecting a position of a mobile device (9) relative to an object (Hv), the position detection system comprising:
a first communication unit (3) equipped to the object and configured to perform a wireless communication with the mobile device using a first communication method;
a second communication unit (2) equipped to the object and configured to perform a wireless communication with the mobile device using a second communication method, the second communication method being different from the first communication method; and
a computer (1) configured to execute a process to decide the position of the mobile device relative to the object based on a first communication signal wirelessly communicated between the first communication unit and the mobile device and/or a second communication signal wirelessly communicated between the second communication unit and the mobile device,
wherein
the first communication method is ultra-wideband (UWB) communication, and
the computer includes:
a determination unit (S205, S215, S405, S430, S505) configured to determine whether the wireless communication with the mobile device can be performed using the first communication unit; and
a decision unit (S250, S445, S465, S540, S555) configured to decide the position of the mobile device relative to the object using the second communication signal in response to the determination unit determining that the wireless communication with the mobile device cannot be performed using the first communication unit.

2. The position detection system according to claim 1, wherein
the second communication method is Bluetooth low energy channel sounding (BLE-CS) communication.

3. The position detection system according to claim 2, wherein
the BLE-CS communication transmits and receives continuous wave (CW) signals having periodically changing frequencies, and
the decision unit is configured to decide the position of the mobile device based on a received phase difference of the CW signals having different frequencies.

4. The position detection system according to any one of claims 1 to 3, further comprising
a country information acquisition unit (S210) configured to acquire country information indicating a country to which a position of the object belongs,
wherein the determination unit (S215) is configured to determine, based on the country information acquired by the country information acquisition unit, whether the wireless communication with the mobile device can be performed using the first communication unit.

5. The position detection system according to claim 4, wherein,
in a case where the country information acquisition unit fails to acquire the country information, the determination unit (S205) determines that the wireless communication with the mobile device cannot be performed using the first communication unit.

6. The position detection system according to claim 4, further comprising
a frequency decision unit (S220) configured to, in response that the country information acquisition unit succeeds in acquiring of the country information and the determination unit determines that the wireless communication with the mobile device can be performed using the first communication unit based on the country information that is acquired, decide a frequency band or a frequency channel to be used in the wireless communication according to the first communication method based on the country information that is acquired.

7. The position detection system according to claim 4, wherein
the country information acquisition unit is configured to repeatedly execute a process for acquiring the country information.

8. The position detection system according to claim 4, wherein
the decision unit is configured to decide the position of the mobile device relative to the object using only the second communication signal when the determination unit determines that the wireless communication with the mobile device cannot be performed using the first communication unit based on the country information or a failure in acquiring of the country information.

9. The position detection system according to any one of claims 1 to 3, wherein
the first communication unit includes multiple anchors (3A to 3F) equipped to the object at different portions,
each of the multiple anchors is configured to perform the wireless communication with the mobile device, and
when at least one of the multiple anchors has a malfunction, the determination unit (S405, S505) determines that the wireless communication with the mobile device cannot be performed using the first communication unit.

10. The position detection system according to claim 9, wherein,
when at least one of the multiple anchors has the malfunction and thus the determination unit (S505) determines that the wireless communication with the mobile device cannot be performed using the first communication unit, the decision unit (S540) decides the position of the mobile device relative to the object based on the first communication signal acquired by the remaining of the multiple anchors operating normally and the second communication signal.

11. The position detection system according to claim 9, wherein
the decision unit (S540, S555) decides the position of the mobile device based on the first communication signal in an area where the position of the mobile device can be determined based on the first communication signal acquired by the wireless communication using the remaining of the multiple anchors operating normally, and
the decision unit (S540, S555) decides the position of the mobile device based on the second communication signal in an area where the position of the mobile device is determined based on the first communication signal acquired by the wireless communication using the at least one of the multiple anchors, which has the malfunction.

12. The position detection system according to claim 9, wherein
the multiple anchors are classified into a mandatory anchor, which is used to determine whether the position of the mobile device belongs to a mandatory area, and a non-mandatory anchor, which is not used to determine whether the position of the mobile device belongs to the mandatory area, depending on an equipped location on the object,
when the at least one of the multiple anchors, which has the malfunction, is the non-mandatory anchor, the determination unit (S430) determines that the wireless communication with the mobile device can be performed using the first communication unit and the decision unit (S465) decides the position of the mobile device relative to the object based on the first communication signal, and
when the at least one of the multiple anchors, which has the malfunction, is the mandatory anchor, the determination unit determines that the wireless communication with the mobile device cannot be performed using the first communication unit and the decision unit (S445) decides the position of the mobile device relative to the object based on the second communication signal.

13. The position detection system according to claim 12, wherein
the object is a vehicle,
the mandatory anchor is located near a driver seat of the vehicle, and
the first communication signal in the wireless communication using the mandatory anchor is used to determine the position of the mobile device in an area near the driver seat of the vehicle.

14. A position detection method performed by a computer for detecting a position of a mobile device (9) relative to an object (Hv), the position detection method comprising:
acquiring (S225, S245) at least one of a first communication signal communicated in a wireless communication between a first communication unit (3) equipped to the object and the mobile device using a first communication method, and a second communication signal communicated in a wireless communication between a second communication unit (2) equipped to the object and the mobile device using a second communication method, wherein the second communication method is different from the first communication method and the first communication method is ultra-wideband (UWB) communication;
determining (S205, S215, S405, S430, S505) whether the wireless communication with the mobile device can be performed using the first communication unit; and
deciding (S250, S445, S465, S540, S555) the position of the mobile device relative to the object using the second communication signal in response to determining that the wireless communication with the mobile device cannot be performed using the first communication unit.

15. A computer, which executes a process for detecting a position of a mobile device relative to an object, wherein the computer is configured to acquire a first communication signal communicated in a wireless communication between a first communication unit (3) equipped to the object and the mobile device using a first communication method, and a second communication signal communicated in a wireless communication between a second communication unit (2) equipped to the object and the mobile device using a second communication method, the second communication method is different from the first communication method, and the first communication method is ultra-wideband (UWB) communication,
the computer comprising:
a determination unit configured to determine whether the wireless communication with the mobile device can be performed using the first communication unit; and
a decision unit configured to decide the position of the mobile device relative to the object using the second communication signal when the determination unit determines that the wireless communication with the mobile device cannot be performed using the first communication unit.
